# EUROPÄISCHE PATENTSCHRIFT

(11) **EP 0 852 609 B1**
(45) Veröffentlichungstag und Bekanntmachung des Hinweises auf die Patenterteilung: **13.03.2002**
(21) Anmeldenummer: 96929326.5
(22) Anmeldetag: 26.08.1996
(51) Int. Cl.: C09D 151/08

(54) **3-KOMPONENTEN-BESCHICHTUNGSMITTEL MIT HOHER LÖSEMITTELBESTÄNDIGKEIT UND HOHER ABKLEBFESTIGKEIT**
THREE-COMPONENT PAINT OF HIGH SOLVENT FASTNESS AND STRIP RESISTANCE
PEINTURE A 3 COMPOSANTS AVEC UNE HAUTE RESISTANCE AUX SOLVANTS ET AU DECOLLEMENT

(30) Priorität: 25.09.1995 DE 19535603
(43) Veröffentlichungstag der Anmeldung: 15.07.1998
(73) Patentinhaber: BASF Coatings Aktiengesellschaft, 48165 Münster (DE)
(72) Erfinder: BORGHOLTE, Harald, D-48151 Münster (DE); HALLMANN, Olaf, D-48165 Münster (DE)
(74) Vertreter: Fitzner, Uwe, Dr.
(86) Internationale Anmeldenummer: EP9603754
(87) Internationale Veröffentlichungsnummer: WO9712004

(56) Entgegenhaltungen:
- EP-A- 0 006 517
- WO-A-92/02590
- DE-C- 4 432 260
- US-A- 4 754 014
- PATENT ABSTRACTS OF JAPAN vol. 016, no. 548 (C-1005), 18.November 1992 & JP,A,04 209679 (NIPPON POLYURETHANE IND CO LTD), 31.Juli 1992,

## Beschreibung

### Gebiet der Erfindung

Die Erfindung betrifft Beschichtungsmittel BM, enthaltend (A) 5 bis 60 Gew.-% mindestens eines polyestermodifizierten Acrylatharzes, (B) 1 bis 35 Gew.-% mindestens eines hydroxylgruppenhaltigen, siloxanmodifizierten Polyacrylatharzes und (C) 5 bis 50 Gew.-% eines Vernetzungsmittels, sowie die Verwendung der Beschichtungsmittel BM im Bereich der Automobillackierung bzw. als Bestandteil mehrschichtiger Überzugssyteme.

### Stand der Technik

Insbesondere an Überzugsmittel, die im Bereich der Autoreparaturlackierung eingesetzt werden, werden sehr hohe Qualitätsansprüche gestellt. So müssen diese Überzugsmittel bei niedrigen Temperaturen (<100 Grad C, bevorzugt < 80 Grad C) aushärtbar sein und dabei bereits nach weniger als 7 Stunden staubtrocken und klebfrei sein. Ferner ist eine gute Lösemittelbeständigkeit, Witterungsbeständigkeit, Abklebfestigkeit, Vergilbungsbeständigkeit, Schleifbarkeit und niedrige Eigenfarbe der resultierenden Beschichtungen gefordert. Darüber hinaus müssen die Beschichtungen überlackierbar sein, um so zu gewährleisten, daß auch Lackschäden im angrenzenden Bereich ausgebessert werden können. Insbesondere im Bereich der Großfahrzeuglackierung, wie beispielsweise der Lackierung von LKW-Aufbauten, ist die Abklebefestigkeit der resultierenden Beschichtungen von Bedeutung. Bei Großfahrzeugen werden üblicherweise Schriftzüge aufgebracht, zu deren Auftragung das Abkleben des angrenzenden Bereichs erforderlich ist. Bei einer unzureichenden Abklebefestigkeit müssen die Markierungen durch aufwendiges Schleifen und Polieren von Hand entfernt werden, was mit einem erheblichen Kostenaufwand verbunden ist.

Aus der DE-A-41 24 167 sind Klarlacke für die Automobillackierung bekannt, die als Bindemittel Copolymerisate enthalten, bei denen 9 bis 20 Gew.-% eines methoxyfunktionellen Polysiloxans einkondensiert sind. Diese Klarlacke weisen jedoch aufgrund des hohen Anteils an Polysiloxan den Nachteil auf, daß der Decklackstand bzw. der Verlauf der Klarlacke negativ beeinflußt wird.

Ferner sind aus der EP-A-603 561 Überzugsmittel bekannt, die als Bindemittel Copolymerisate enthalten, bei denen 3 bis 40 Gew.% eines alpha,omega-hydroxy-,-carboxy- und/oder -epoxyfunktionellen Polysiloxan einpolymerisiert sind.

JP-A-2-163177 umfaßt ein Überzugsmittel auf der Basis von hydroxylgruppenhaltigen Acrylatcopolymerisaten und Polyisocyanaten, das insbesondere als Bautenanstrichmittel eingesetzt wird. Die Beschichtungen zeichnen sich dabei durch eine verbesserte Witterungsstabilität aus, die durch Einpolymerisieren von 0,5 bis 15 Gew.-% eines Polysiloxan-Makromonomers in das hydroxylgruppenhaltige Acrylatcopolymerisat erzielt wird. Die Verwendung eines Umsetzungsprodukts aus Acryl- und/oder Methacrylsäure mit dem Glycidylester einer in alpha-Stellung verzweigten Monocarbonsäure mit 5 bis 18 C-Atomen als Monomerkomponente ist in dieser Schrift jedoch nicht beschrieben.
Diese aus der JP-A-2-163177 bekannten Beschichtungsmittel weisen insbesondere den Nachteil auf, daß der Decklackstand bzw. Verlauf der beschriebenen Beschichtungsmittel durch den hohen Siloxangehalt der als Bindemittel eingesetzten Copolymerisate negativ beeinflußt wird.

Aus der US-A-4,754,014 sind Beschichtungsmittel auf der Basis von hydroxylgruppenhaltigen Acrylatcopolymerisaten, die mit Polysiloxanmakromonomeren modifiziert werden, bekannt. Die Polysiloxanmakromonomere werden hergestellt durch Umsetzung eines hydroxyfunktionellen Polysiloxans mit einem epoxyfunktionellen Acrylat. Diese aus der US-A-4,754,014 bekannten Beschichtungsmittel weisen eine hohe Flexibilität auf und sind somit besonders für die Lackierung von Kunststoffmaterialien, wie beispielsweise Stoßstangen, geeignet. Diese Beschichtungsmittel unterscheiden sich von den Beschichtungsmitteln der vorliegenden Anmeldung insbesondere dadurch, daß die Verwendung eines Umsetzungsprodukts aus Acryl- und/oder Methacrylsäure mit dem Glycidylester einer in alpha-Stellung verzweigten Monocarbonsäure mit 5 bis 18 C-Atomen pro Molekül als Monomerkomponente zur Herstellung der hydroxyfunktionellen Acrylatcopolymerisate sowie die spezifische Kombination von hydroxyfunktioneller Acrylatkomponente, polyestermodifiziertem Polyacrylat und Vernetzerkompomente in dieser Schrift nicht beschrieben ist.

Aus der EP-B-175 092 ist schließlich bekannt, daß die Verlaufseigenschaften sowie die Gleitfähigkeit und Kratzfestigkeit von Beschichtungen dadurch verbessert werden können, daß den Beschichtungsmitteln polyethergruppenfreie, polyestermodifizierte Siloxane zugesetzt werden. Der Einsatz von polymerisierbaren, ethylenisch ungesättigten Polysiloxanmakromonomeren zur Modifizierung von Bindemitteln auf der Basis von Acrylatcopolymerisaten ist in EP-B-175 092 nicht beschrieben.

Die ebenfalls noch nicht veröffentliche deutsche Patentanmeldung DE-A-195 19 807 beschreibt Beschichtungsmittel, enthaltend (A) mindestens eine hydroxylgruppenhaltige Komponente, bestehend aus (A1) mindestens einem Polyester und (A2) mindestens einem zumindest teilweise in Gegenwart der Komponente (A1) hergestellten hydroxylgruppenhaitigen Polyacrylatharz und (B) mindestens ein Vernetzungsmittel. Darüber hinaus beschreibt die noch nicht veröffentlichte deutsche Patentanmeldung 195 19 807.7 noch den Einsatz solcher Beschichtungsmittel bei Verfahren zur Herstellung von schützenden und/oder dekorativen Überzüge auf Substratoberflächen sowie die Verwendung der Beschichtungsmittel im Bereich der Autoreparaturlackierung. Die zusätzliche Verwendung von hydroxylgruppenhaltigen Acrylatcopolymerisaten mit Polysiloxanmakromonomeren und Umsetzungsprodukten aus Acryl- und/oder Methacrylsäure mit dem Glycidylester einer in alpha-Stellung verzweigten Monocarbonsäure mit 5 bis 18 C-Atomen pro Molekül als Comonomereinheiten wird in P 195 19 807.7 nicht beschrieben.

### Aufgabe und Lösung

Der vorliegenden Erfindung liegt die Aufgabe zugrunde, Beschichtungsmittel auf der Basis von hydroxylgruppenhaltigen Polyacrylatharzen und Isocyanatvernetzern zur Verfügung zu stellen, die zu überlackierbaren Beschichtungen mit einer guten Witterungsbeständigkeit sowie einer guten Lösemittel- und Chemikalienbeständigkeit führen. Um für den Bereich der Autoreparaturlackierung einsetzbar zu sein, sollten die Beschichtungsmittel ferner bei niederen Temperaturen härtbar sein und dabei bereits nach möglichst kurzer Zeit zu staubtrockenen und klebfreien Oberflächen führen. Weiterhin sollten die Überzugsmittel schleifbar sein, eine überlackierbarkeit auch ohne Anschleifen besitzen und eine gute Abklebefestigkeit und Spritznebelaufnahme haben. Diese Eigenschaften sollten auch erreicht werden, wenn die Beschichtungsmittel bei niedrigen Temperaturen, beispielsweise bei ca. 10 Grad C, appliziert werden. Weiterhin bestand das ausgeprägte Bedürfnis nach einem besonders kratzfesten und lösemittelbestandigen Decklack mit sogenannten "maintenance free"-Eigenschaften, das heißt im besonderen dauerhafte Schmutz- und Wasserabweisung, für Großfahrzeuge, wie sie beispielsweise im öffentlichen Nahverkehr eingesetzt werden.

Diese Aufgabe wird überraschenderweise durch ein Beschichtungsmittel BM gelöst, enthaltend:
(A) 5 bis 60 Gew.-% mindestens eines polyestermodifizierten Polyacrylatharzes, bestehend aus:
   (a1) 20 bis 60 Gew.-% mindestens eines Polyesters und
   (a2) 40 bis 80 Gew.-% mindestens eines hydroxylgruppenhaltigen Polyacrylatharzes, das zumindest teilweise in Gegenwart der Komponente (a1) hergestellt worden ist, wobei
      1.) der Polyester (a1) eine OH-Zahl zwischen 90 und 130 mg KOH/g, eine Säurezahl von weniger als 10 mg KOH/g, ein zahlenmittleres Molekulargewicht Mn zwischen 1.300 und 3.500 Dalton und eine Uneinheitlichkeit zwischen 5 und 50 aufweist,
      2.) das Polyacrylatharz (a2) ein oder mehrere Monomere, ausgewählt aus der Gruppe 4-Hydroxy-n-butylacrylat, 4-Hydroxy-n-butylmethacrylat, 3-Hydroxy-n-butylacrylat, 3-Hydroxy-n-butylmethacrylat und/oder Hydroxyethylmethacrylat, einpolymerisiert enthält,
      3.) das Polyacrylatharz (a2) eine OH-Zahl zwischen 50 und 150 mg KOH/g und eine Säurezahl zwischen 0 und 10 mg KOH/g aufweist und
      4.) der Komponente (A) nach ihrer Herstellung oder dem Beschichtungsmittel 0,1 bis 1 Gew.-%, bezogen auf das Gewicht der Komponente (A) ohne Lösemittel, mindestens einer aromatischen Mono- und/oder Polycarbonsäure und/oder eines Anhydrids einer aromatischen Polycarbonsäure zugesetzt werden und
(B) 1 bis 35 Gew.-% mindestens eines hydroxylgruppenhaltigen, siloxanmodifizierten Polyacrylatharzes, bestehend aus:
   (b1) ein von (b2), (b3), (b4), (b5), (b6) und (b7) verschiedener, mit (b2), (b3), (b4), (b5), (b6) und (b7) copolymerisierbarer, im wesentlichen carboxylgruppenfreier (Meth)acrylsäureester oder ein Gemisch aus solchen Monomeren,
   (b2) ein mit (b1), (b3), (b4), (b5), (b6) und (b7) copolymeriserbares, von (b3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
   (b3) mindestens ein Umsetzungsprodukt aus Acrylsäure und/oder Methacrylsäure mit dem Glycidylester einer in alpha-Stellung verzweigten Monocarbonsäure mit 5 bis 18 C-Atomen pro Molekül oder anstelle des Umsetzungsprodukts eine äquivalente Menge Acryl- und/oder Methacrylsäure, die dann während oder nach der Polymerisationsreaktion mit dem Glycidylester einer in alpha-Stellung verzweigten Moncabonsäure mit 5 bis 18 C-Atomen pro Molekül umgesetzt wird,
   (b4) gegebenenfalls ein mindestens eine Carboxylgruppe pro Molekül tragendes, mit (b1), (b2), (b3), (b5), (b6) und (b7) copolymerisierbares, ethylenisch ungesättigtes Monomer oder ein Gemisch aus solchen Monomeren,
   (b5) ein Polysiloxanmakromonomer mit einem zahlenmittleren Molekulargewicht Mn von 1.000 bis 40.000 Dalton und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Makromonomeren,
   (b6) ein yinylaromatischer Kohlenwasserstoff oder ein Gemisch verschiedener vinylaromatischer Kohlenwasserstoffe und
   (b7) gegebenenfalls ein mit (b1), (b2), (b3), (b4), (b5) und (b6) copolymerisierbares, von (b1), (b2), (b3), (b4), (b5) und (b6) verschiedenes, im wesentlichen carboxylgruppenfreies, ethylenisch ungesättigtes Monomer oder ein Gemisch aus solchen Monomeren,
   sowie
(C) 5 bis 50 Gew.-% mindestens eines Isocyanatvemetzungsmittels.

In weiteren bevorzugten Ausführungsformen der Erfindung besteht die Komponente (A) aus 30 bis 50 Gew.-% mindestens eines Polyesters (a1) und 50 bis 70 Gew.-% mindestens eines Polyacrylatharzes (a2),
werden der Komponente (A) nach ihrer Herstellung oder dem Beschichtungsmittel 0,4 bis 0,9 Gew.-%, bezogen auf das Gewicht der Komponente (A) ohne Lösemittel, mindestens einer aromatischen Mono- und/oder Polycarbonsäure und/oder eines Anhydrids einer aromatischen Polycarbonsäure zugesetzt,
ist das Polyacrylatharz (a2) erhältlich durch Polymerisation von:
(a) 5 bis 50 Gew.-%, bevorzugt 10 bis 35 Gew.-%, eines oder mehrerer Monomerer, ausgewählt aus der Gruppe 4-Hydroxy-n-butyl(meth)acrylat, 3-Hydroxy-n-butyl-(meth)acrylat und/oder hydroxyethylmethacrylat,
(b) 0 bis 50 Gew.-%, bevorzugt 0 bis 30 Gew.-% eines von (a) verschiedenen, hydroxylgruppenhaltigen, ethylenisch ungesättigten, copolymerisierbaren Monomeren oder eines Gemisches aus solchen Monomeren,
(c) 5 bis 95 Gew.-%, bevorzugt 15 bis 55 Gew.-%, eines von (a) und (b) verschiedenen, aliphatischen und/oder cycloaliphatischen Esters der Acryl- und/oder Methacrylsäure oder eines Gemischs aus solchen Monomeren
(d) 0 bis 30 Gew.-%, bevorzugt 5 bis 15 Gew.-%, eines von (a), (b) und (c) verschiedenen, copolymerisierbaren Vinylesters oder eines Gemischs aus solchen Monomeren,
(e) 0 bis 85 Gew-%, bevorzugt 15 bis 60 Gew.-%, eines von (a), (b), (c) und (d) verschiedenen, vinylaromatischen Kohlenwasserstoffs oder eines Gemischs aus solchen Monomeren, sowie
(f) 0 bis 10 Gew.-%, bevorzugt 0 bis 8 Gew.-%, eines von (a), (b), (c), (d) und (e) verschiedenen, weiteren ethylenisch ungesättigten Monomeren oder eines Gemischs aus solchen Monomeren
zumindestens teilweise in Gegenwart der Komponente (a1), wobei die Summe der Gewichtsanteile der Monomeren (a) bis (f) jeweils 100 Gew.-% beträgt.

Die Einsatzmenge des oder der Polysiloxanmakromonomeren (b5) zur Modifizierung der hydroxylgruppenhaltigen Polyacrylatharze (B) beträgt bevorzugt weniger als 3 Gew.-%, besonders bevorzugt zwischen 0,1 und 1 Gew.-%, ganz besonders bevorzugt 0,3 bis 0,7 Gew.-%, jeweils bezogen auf das Gesamtgewicht der zur Herstellung des Polyacrylatharzes (B) eingesetzten Monomeren.

Weiterhin bevorzugt sind Polyacrylatharze (B), die durch Polymerisation von:
(b1) 5 bis 74 Gew.-%, bevorzugt 5 bis 30 Gew.-%, der Komponente (b1),
(b2) 10 bis 40 Gew.-%, bevorzugt 15 bis 25 Gew.-%, der Komponente (b2),
(b3) 10 bis 50 Gew.-%, der Komponente (b3),
(b4) 0 bis 10 Gew.-%, bevorzugt 0,1 bis 6 Gew.-%, der Komponente (b4),
(b5) weniger als 3 Gew.-%, bevorzugt 0,1 bis 1 Gew.-% und besonders bevorzugt 0,3 bis 0,7 Gew.-%, der Komponente (b5),
(b6) 5 bis 40 Gew.-%, bevorzugt 10 bis 30 Gew.-%, der Komponente (b6) und
(b7) 0 bis 40 Gew.-%, bevorzugt 0 bis 30 Gew.-%, der Komponente (b7),
wobei sich die Summe der Gewichtsanteile der Komponenten (b1) bis (b7) jeweils 100 Gew.-% beträgt,
hergestellt werden.

### Durchführung der Erfindung

### Das polyestermodifizierte Polyacrylatharz (A)

Die Polyester (a1) sind bevorzugt erhältlich durch Umsetzung von
(p1) Polycarbonsäuren, oder deren veresterungsfähigen Derivaten, gegebenenfalls gemeinsam mit Mono-carbonsäuren,
(p2) Polyolen, gegebenenfalls gemeinsam mit Monoalkoholen,
(p3) gegebenenfalls mit weiteren modifizierenden Komponenten und
(p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) aromatische und/oder aliphatische Polycarbonsäuren eingesetzt. Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsaure, Hexahydrophthalsäure, 1,2-, 1,3- und 1,4-Cyclohexancarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphatischen Polycarbonsäuren können sowohl in ihrer cisals auch in ihrer trans-Form sowie als Gemisch beider Formen eingesetzt werden. Geeignet sind auch die veresterungsfähigen Derivate der obengenannten Polycaronsäuren, wie beispielsweise deren ein- oder mehrwertige Ester mit aliphatischen Alkoholen mit 1 bis 4 C-Atomen oder Hydroxyalkoholen mit 1 bis 4 C-Atomen. Außerdem können auch die Anhydride der obengenannten Säuren eingesetzt werden, sofern diese existieren. Gegebenenfalls können gemeinsam mit den Polycarbonsäure auch Monocarbonsäuren eingesetzt werden, wie beispielsweise Benzoesäure, tert.-Butylbenzoesäure, Laurinsäure, Isononansäure und Fettsäuren natürlich vorkommender öle. Bevorzugt wird als Monocarbonsäure Isononansäure eingesetzt.

Geeignete Alkoholkomponenten (p2) zur Herstellung der Polyester bzw. Alkydharze (a1) sind mehrwertige Alkohole, wie Ethylenglykol, Propandiole, Butandiole, Hexandiole, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxyethylisocyanat, Polyethylenglykol, Polypropylenglykol, gegebenenfalls gemeinsam mit einwertigen Alkoholen, wie beispielsweise Butanol, Octanol, Laurylalkohol, sowie ethoxylierten bzw. propoxylierten Phenolen.
Als Komponenten (p3) zur Herstellung der Polyester (a1) sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxidverbindungen, gegebenenfalls auch Monoisocyanate und/oder Monoepoxidverbindungen verwendet. Geeignete Komponenten (p3) sind beispielsweise in der DE-A-40 24 204 auf Seite 4, Zeilen 4 bis 9 beschrieben.

Als Komponente (p4) zur Herstellung der Polyester bzw. Alkydharze (a1) geeignet sind Verbindungen, die außer einer gegenüber den funktionellen Gruppen des Polyesters (a1) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Bezüglich weiterer Einzelheiten wird auf die DE-A-40 24 204, Seite 4, Zeilen 10 bis 49 verwiesen.

Die Herstellung der Polyester (a1) erfolgt nach den bekannten Methoden der Veresterung, wie beispielsweise in:
1. Temple C. Patton, Alkyd Resin Technology, Interscience Publishers John Wiley & Sons, New York, London, 1962;
2. Dr. Johannes Schreiber, Chemie und Technologie der künstlichen Harze, Wissenschaftliche Verlagsgesellschaft mbH, Stuttgart, 1943;
3. Hans Wagner, Karl-Friedrich Sarx, Lackkunstharze, 4. Auflage, Carl Hanser Verlag, München, 1959;
4. Ullmanns Enzyklopädie der technischen Chemie, Band 14, Seiten 80 bis 106, 1963
beschrieben.

Die Umsetzung erfolgt dabei üblicherweise bei Temperaturen zwischen 180 und 280 Grad C, gegebenenfalls in Gegenwart eines geeigneten Veresterungskatalysators, wie beispielsweise Lithiumoctoat, Dibutylzinnoxid, Dibutylzinndilaurat, p-Toluolsulfonsäure oder andere.

Üblicherweise wird die Herstellung der Polyester (a1) in Gegenwart geringer Mengen eines geeigneten Lösemittels als Schleppmittel durchgeführt. Als Schleppmittel werden beispielsweise aromatische Kohlenwasserstoffe, wie insbesondere Xylol, und (cyclo)aliphatische Kohlenwasserstoffe, wie beispielsweise Cyclohexan, eingesetzt.

Die als Komponente (a2) in den erfindungsgemäßen Beschichtungsmitteln eingesetzten Polyacrylate weisen OH-Zahlen zwischen 50 und 150, bevorzugt zwischen 75 und 105 mg KOH/g und Säurezahlen zwischen 0 und 10, bevorzugt zwischen 0 und 8 mg KOH/g auf, wobei die OH- und Säurezahlen jeweils ohne Berücksichtigung des Polyesteranteils berechnet sind. Die zahlenmittleren Molekulargewichte der in der Gegenwart der Polyester hergestellten Polyacrylatharze liegen üblicherweise zwischen 1.500 und 5.000, bevorzugt zwischen 2.000 und 4.000 Dalton, bestimmt per Gelpermeationschromatographie (GPC) mit Polystyrol als Standard.
Es ist erfindungswesentlich, daß das Polyacrylatharz (a2) zumindestens teilweise in Gegenwart des Polyesterharzes (a1) hergestellt wird. Vorteilhafterweise werden mindestens 40 Gew.-% und besonders vorteilhafterweise zwischen 50 und 70 Gew.-% der Komponente (a2) in Gegenwart der Komponente (a1) hergestellt.
Die gegebenenfalls restliche Menge der Komponente (a2) wird der Bindemittellösung bzw. dem Beschichtungsmittel anschließend zugegeben. Dabei ist es möglich, daß dieses bereits polymerisierte Harz die gleiche Monomerzusammensetzung aufweist wie das in Gegenwart des Polykondensationsharzes aufgebaute Polyadditionsharz. Es kann aber auch ein hydroxylgruppenhaltiges Polyadditions- und/oder Polykondensationsharz mit einer unterschiedlichen Monomerzusammensetzung zugefügt werden. Außerdem ist es möglich, eine Mischung unterschiedlicher Polyadditions- und/oder Polykondensationsharze zuzufügen, wobei gegebenenfalls ein Harz die gleiche Monomerzusammensetzung aufweist wie das in Gegenwart des Polykondensationsharzes aufgebaute Polyadditionsharz.

Das Polyacrylatharz (a2) enthält ein oder mehrere Monomere, ausgewählt aus der Gruppe 4-Hydroxy-n-butyl(meth) acrylat, 3-Hydroxy-n-butyl(meth)-acrylat und/oder Hydroxyethylmethacrylat als Monomerkomponenten einpolymerisiert.

Die Herstellung der erfindungsgemäß eingesetzten Polyacrylatharze kann nach den allgemein bekannten Polymerisationsverfahren erfolgen (vergleiche beispielsweise: Houben-Weyl, Methoden der organischen Chemie, 4. Auflage, Band 14/1, Seiten 24 bis 255, 1961).
Die erfindungsgemäß eingesetzten Polyacrylatharze werden vorzugsweise mit Hilfe der Lösungspolymerisation hergestellt. Hierbei wird üblicherweise ein organisches Lösemittel bzw. Lösemittelgemisch zusammen mit dem Polyester (a1) vorgelegt und zum sieden erhitzt. In diese Mischung aus organischem Lösemittel(gemisch) und Polyesterharz (a1) werden dann das zu polymerisierende Monomerengemisch sowie ein oder mehrere Polymerisationsinitiatoren kontinuierlich zugegeben. Die Polymerisation erfolgt bei Temperaturen zwischen 100 und 160, vorzugsweise zwischen 130 und 150 Grad C. Die Polymerisation wird bevorzugt in einem hochsiedenden, organischen, gegenüber den eingesetzten Monomeren inerten Lösemittel durchgefuhrt. Beispiele für geeignete Lösemittel sind: höher substituierte Aromaten, wie beispielsweise Solvent Naphtha®, Schwerbenzol, verschiedene Solvesso®-Typen, verschiedene Shellsol®-Typen und Deasol®, sowie höhersiedende aliphatische und cycloaliphatische Kohlenwasserstoffe, wie beispielsweise verschiedene Testbenzine, Mineralterpentinöl, Tetralin und Dekalin sowie verschiedene Ester, wie z.B. Ethylglykolacetat, Butylglykolacetat, Ethylglykoldiacetat und andere.

Als Polymerisationsinitiatoren werden vorzugsweise freie Radikale bildende Initiatoren eingesetzt, wobei die Initiatorart und -menge üblicherweise so gewählt wird, daß bei der Polymerisationstemperatur während der Zulaufphase ein möglichst konstanter Radikalstrom vorliegt.
Als Beispiele für einsetzbare Initiatoren seien genannt: Di-tert.-Butylperoxid, tert.-Butylhydroperoxid, tert.-Butylperacetat, tert.-Butylperoxybenzoat, tert.-Butylperoxypivalat, tert.-Butylperoxy-3,5,5-trimethylhexanoat, tert.-Butylperoxy-2-ethylhexanoat, Dicumylperoxid, Cumylhydroperoxid, tert.-Amylperoxybenzoat, tert.-Amylperoxy-2-ethylhexanoat; Diacylperoxide, wie z.B. Diacetylperoxid, Peroxyketale, 2,2-Di-(tert.-amylperoxy)propan, Ethyl-3,3-di-(tert.-amylperoxy-)butyrat und thermolabile hochsubstituierte Etanderivate, beispielsweise auf der Basis silylsubstituierter Ethanderivate und auf der Basis Benzpinakol. Weiterhin können auch Azoverbindungen, wie beispielsweise Azo-bis-isovaleronitril, Azo-bis-cyclohexannitril oder Azo-bis-isobutyronitril, eingesetzt werden.
Vor allem werden tert.-Butylgruppen enthaltende Initiatoren, wie beispielsweise Di-tert.-butylperoxid, tert.-Butylhydroperoxid, 2,2-Di-tert.-butylperoxybutan und 1,3-Bis(tert.-butylperoxyisopropyl)benzol, eingesetzt, da sie eine Pfropfung des Polyacrylats auf den Polyester fördern.
Die Initiatormenge beträgt in den meisten Fällen 0,1 bis 8 Gew.-%, bezogen auf die eingesetzten Monomeren, sie kann jedoch gegebenenfalls auch höher liegen. Der Initiator, gelöst in einem Teil des für die Polymerisationsreaktion eingesetzten Lösemittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Bei einer anderen bevorzugten Herstellungsvariante wird mit dem Initiatorzulauf etwa 15 Minuten vor der Zugabe der Monomeren begonnen, um so ein hohes Radikalangebot zu Beginn der Polymerisation bereitzustellen. Werden Initiatoren mit einer nur geringen Zerfallsrate unter den vorliegenden Reaktionsbedingungen eingesetzt, so ist es auch möglich, den Initiator vorzulegen.

Die Polymerisationsbedingungen, wie Reaktionstemperatur, Zulaufzeit der Monomerenmischung, Menge und Art der organischen Lösemittel, Polymerisationsinitiatoren sowie eventuell Molekulargewichtsreglern, wie beispielsweise Mercaptanen, Thioglykolsäureestern oder Halogenkohlenwasserstoffen, werden so ausgewählt, daß die erfindungsgemäß eingesetzten Polyacrylatharze das gewünschte Molekulargewicht aufweisen.

Die Säurezahl der erfindungsgemäßen Polyacrylatharze kann vom Fachmann durch Einsatz entsprechender Mengen carboxylgruppenhaltiger Monomerer eingestellt werden. Analoges gilt für die Einstellung der OH-Zahl, die über die Menge an eingesetzten hydroxylgruppenhaltigen Monomeren steuerbar ist.

Bevorzugt werden als Komponente (a2) hydroxylgruppenhaltige Polyacrylatharze eingesetzt, die erhältlich sind, indem:
(a) 5 bis 50 Gew.-%, bevorzugt 10 bis 35 Gew.-%, eines oder mehrerer Monomerer, ausgewählt aus der Gruppe 4-Hydroxy-n-butyl(meth)acrylat, 3-Hydroxy-n-butyl(meth)acrylat und/oder Hydroxyethylmethacrylat,
(b) 0 bis 50 Gew.-%, bevorzugt 0 bis 30 Gew.-% eines von (a) verschiedenen, hydroxylgruppenhaltigen, ethylenisch ungesättigten, copolymerisierbaren Monomeren oder eines Gemisches aus solchen Monomeren,
(c) 5 bis 95 Gew.-%, bevorzugt 15 bis 55 Gew.-%, eines von (a) und (b) verschiedenen, aliphatischen und/oder cycloaliphatischen Esters der Acryl- und/oder Methacrylsäure oder eines Gemischs aus solchen Monomeren,
(d) 0 bis 30 Gew.-%, bevorzugt 5 bis 15 Gew.-%, eines von (a), (b) und (c) verschiedenen, copolymerisierbaren Vinylesters oder eines Gemischs aus solchen Monomeren,
(e) 0 bis 85 Gew-%, bevorzugt 15 bis 60 Gew.-%, eines von (a), (b), (c) und (d) verschiedenen, vinylaromatischen Kohlenwasserstoffs oder eines Gemischs aus solchen Monomeren, sowie
(f) 0 bis 10 Gew.-%, bevorzugt 0 bis 8 Gew.-%, eines von (a), (b), (c), (d) und (e) verschiedenen, weiteren ethylenisch ungesättigten Monomeren oder eines Gemischs aus solchen Monomeren
zumindestens teilweise in Gegenwart der Komponente (A1), wobei die Summe der Gewichtsanteile der Monomeren (a) bis (f) jeweils 100 Gew.-% beträgt.

Als weiteres hydroxylgruppenhaltiges Monomer (Komponente (b)) können zur Herstellung des Acrylatharzes gegebenenfalls noch weitere hydroxylgruppenhaltige Ester der Acryl- und/oder der Methacrylsäure eingesetzt werden. Beispiele für als Komponente (b) geeignete hydroxylgruppenhaltige Monomere sind insbesondere das Umsetzungsprodukt aus 1 mol Hydroxyethylacrylat und/oder Hydroxyethylmethacrylat und durchschnittlich 2 mol epsilon-Caprolacton und/oder das Umsetzungsprodukt aus Acrylsäure und/oder Methacrylsäure mit dem Glycidylester einer Carbonsäure mit einem tertiären C-Atom. Diese Glycidylester von am alpha-C-Atom verzweigten Carbonsäuren mit 11 bis 13 C-Atomen (Versaticsäure) sind beispielsweise unter dem Namen Cardura® der Firma Shell im Handel erhältlich. Die Umsetzung der Acryl- und/oder Methacrylsäure mit dem Glycidylester kann dabei vor, während oder nach der Polymerisation erfolgen.
Als Komponente (b) können aber auch Alkylester der (Meth)acrylsäure, wie beispielsweise Hydroxyethylacrylat, Hydroxypropyl(meth)acrylat, Hydroxypentyl(meth)-acrylate, Hydroxyoctyl(meth)acrylate und ähnlichen, und/oder von (a) verschiedene hydroxylgruppenhaltige Ester einer polymerisierbaren ethylenisch ungesättigten Carbonsäure, wie z.B. die hydroxygruppenhaltigen Ester der Croton- und Isocrotonsäure, eingesetzt werden. Als Komponente (c) kann im Prinzip jeder von (a) und (b) verschiedene aliphatische oder cycloaliphatische Ester der Acryl- oder der Methacrylsäure oder ein Gemisch aus solchen Monomeren eingesetzt werden. Als Beispiele seien genannt: aliphatische Ester der (Meth)acrylsäure, wie Methyl-, Ethyl-, Propyl-, n-Butyl-, iso-Butyl-, tert.-Butyl-, n-Hexyl-, 2-Ethylhexyl-, Stearyl- und Lauryl(meth)acrylat und cycloaliphatische Ester, wie Furfuryl-, Cyclohexyl-, Isobornyl- und tert.-Butylcyclohexyl(meth)acrylat.

Als Komponente (d) werden Vinylester von Moncarbonsäuren eingesetzt. Bevorzugt werden Vinylester von in alpha-Stellung verzweigten Monocarbonsäuren mit 5 bis 15 C-Atomen je Molekül eingesetzt. Die verzweigten Moncarbonsäuren können erhalten werden durch die Umsetzung von Ameisensäure oder Kohlenmonoxid und wasser mit Olefinen in Gegenwart eines flüssigen, stark sauren Katalysators, wobei die Olefine Crackprodukte von paraffinischen Kohlenwasserstoffen, wie Mineralölfraktionen, sein können und sowohl verzweigte als auch geradkettige acyclische und/oder cycloaliphatische Olefine enthalten können. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quartären Kohlenstoffatom sitzen. Andere olefinische Ausgangsstoffe sind beispielsweise Propylentrimer, Propylentetramer und Diisobutylen. Die Vinylester können auch auf an sich bekannte Weise aus den Säuren hergestellt werden, z.B. indem man die Säuren mit Acetylen reagieren läßt. Besonders bevorzugt werden, wegen der guten Verfügbarkeit, Vinylester von gesättigten aliphatischen Monocarbonsäuren mit 9 bis 11 C-Atomen, die am alpha-C-Atom verzweigt sind.
Besonders bevorzugt ist außerdem der Vinylester der p-tert.-Butylbenzoesäure. Beispiele für weitere geeignete Vinylester sind Vinylacetat und Vinylpropionat.

Als Komponente (e) werden vinylaromatische Kohlenwasserstoffe, wie Styrol, alpha-Alkylstyrole, wie alpha-Methylstyrol, Chlorstyrole, o-, m- und p-Methylstyrol, 2,5-Dimethylstyrol, p-Methoxystyrol, p-tert.-Butylstyrol, p-Dimethylaminostyrol, p-Acetamidostyrol und Vinyltoluol, eingesetzt, wobei bevorzugt Vinyltouluole und insbesondere Styrol eingesetzt werden.

Als Komponente (f) kann im Prinzip jedes von (a), (b), (c), (d) und (e) verschiedene ethylenisch ungesättigte Monomer oder ein Gemisch aus solchen Monomeren eingesetzt werden. Als Beispiele für Monomere, die als Komponente (f) eingesetzt werden können, seien genannt: carboxylgruppenhaltigen Monomer, wie Acryl- und/oder Methacrylsäure, Amide der (Meth)acrylsäure, wie (Meth)acrylamid, Nitrile der (Meth)acrylsäure, Vinylether und Vinylester,

Der Komponente (A) wird nach ihrer Herstellung 0,1 bis 1 Gew.-%, besonders bevorzugt 0,4 bis 0,9 Gew.-% mindestens einer aromatischen Mono- und/oder Polycarbonsäure und/oder mindestens eines Anhydrids einer aromatischen Carbonsäure zugesetzt. Die Menge an zugesetzter Säure bzw. Anhydrid ist dabei bezogen auf das Gewicht des hydroxylgruppenhaltigen Bindemittels, berechnet als Festharz, das heißt ohne Lösemittelanteil. Bevorzugt werden dabei Phthalsäureanhydrid und dessen Halbester, Benzoesäure und/oder alkyl- und/oder alkoxysubstituierte Benzoesäure zugesetzt. Besonders bevorzugt wird Benzoesaure zugesetzt.
Die Zugabe der Säure erfolgt bevorzugt bei einer Temperatur von 20 bis 120 Grad C, besonders bevorzugt bei einer Tempeatur von 40 bis 100 Grad C. Die Zugabe des Anhydrids erfolgt bevorzugt bei Temperaturen zwischen 100 und 180, besonders bevorzugt zwischen 130 und 170 Grad C. Die Säure bzw. das Anhydrid kann dabei dem fertigen Beschichtungsmittel, das heißt nach Zusatz von Pigmenten, Füll- und Hilfsstoffen sowie Vernetzungsmittel (C) zugesetzt werden. Bevorzugt wird die Säure bzw. das Anhydrid aber dem Polyacrylatharz (a2) zugesetzt und möglichst homogen verteilt.

### Das hydroxylgruppenhaltige, siloxanmodifizierte Polyacrylatharz (B)

Es ist erfindungswesentlich, daß das Polyacrylatharz (B) als modifizierende Comonmereinheiten Polysiloxanmakromonomere eines noch zu beschreibenden Typs enthält. Für die Modifizierung des Polyacrylatharzes (B) sind Polysiloxanmakromonomere (b5) geeignet, die ein zahlenmittleres Molekulargewicht Mn von 1.000 bis 40.000, bevorzugt von 2.000 bis 10.000 Dalton und im Mittel 0,5 bis 2,5, bevorzugt 0,5 bis 2,0, ethylenisch ungesättigte Doppelbindungen pro Molekül oder im Mittel 0,5 bis 2,5, bevorzugt 0,5 bis 2,0, Epoxydgruppen pro Molekül aufweisen.
Die Einsatzmenge des oder der Polysiloxanmakromonomeren (b5) zur Modifizierung der Polyacrylatharze (B) beträgt weniger als 5 Gew.-%, bevorzugt weniger als 3 Gew.-%, besonders bevorzugt 0,1 bis 1 Gew.-%, ganz besonders bevorzugt 0,3 bis 0,7 Gew.-% jeweils bezogen auf das Gesamtgewicht der zur Herstellung des Polyacrylatharzes (B) benötigten Monomeren.
Die Verwendung derartiger Polysiloxanmakromonomerer (b5) führt zu einer deutlich verbesserten Abklebe- und Lösemittelbeständigkeit der resultierenden Beschichtungen.

Das erfindungsgemäß eingesetzte Polyacrylatharz (B) ist erhältlich, indem in einem organischen Lösemittel oder Lösemittelgemisch und in Gegenwart mindestens eines Polymerisationsinitiators
(b1) ein von (b2), (b3), (b4), (b5), (b6) und (b7) verschiedener, mit (b2), (b3), (b4), (b5), (b6) und (b7) copolymerisierbarer, im wesentlichen carboxylgruppenfreier (Meth)acrylsäureester oder ein Gemisch aus solchen Monomeren,
(b2) ein mit (b1), (b3), (b4), (b5), (b6) und (b7) copolymeriserbares, von (b3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(b3) mindestens ein Umsetzungsprodukt aus Acrylsäure und/oder Methacrylsäure mit dem Glycidylester einer in alpha-Stellung verzweigten Monocarbonsäure mit 5 bis 18 C-Atomen pro Molekül oder anstelle des Umsetzungsprodukts eine äquivalente Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen pro Molekül umgesetzt wird,
(b4) gegebenenfalls ein mindestens eine Carboxylgruppe pro Molekül tragendes, mit (b1), (b2), (b3), (b5), (b6) und (b7) copolymerisierbares, ethylenisch ungesättigtes Monomer oder ein Gemisch aus solchen Monomeren,
(b5) ein Polysiloxanmakromonomer mit einem zahlenmittleren Molekulargewicht Mn von 1.000 bis 40.000 Dalton und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Makromonomeren,
(b6) ein vinylaromatischer Kohlenwasserstoff oder ein Gemisch verschiedener vinylaromatischer Kohlenwasserstoffe und
(b7) gegebenenfalls ein mit (b1), (b2), (b3), (b4), (b5) und (b6) copolymerisierbares, von (b1), (b2), (b3), (b4), (b5) und (b6) verschiedenes, im wesentlichen carboxylgruppenfreies, ethylenisch ungesättigtes Monomer oder ein Gemisch aus solchen Monomeren,
polymerisiert werden, wobei (b1), (b2), (b3), (b4), (b5), (b6) und (b7) in Art und Menge so ausgewählt werden, daß das Polyacrylatharz (B) die gewünschte OH-Zahl und Säurezahl aufweist und wobei die Menge an Komponente (b5) weniger als 5 Gew.-%, bezogen auf das Gesamtgewicht der zur Herstellung des Polyacrylatharzes (B) eingesetzten Monomeren, beträgt.

Zur Herstellung der erfindungsgemäß einzusetzenden Polyacrylatharze (B) kann als Komponente (b1) jeder mit (b2), (b3), (b4), (b5), (b6) und (b7) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkyl(meth)acrylate mit bis zu 20 C-Atomen im Esterrest, wie beispielsweise Methyl-, Ethyl-, Propyl-, Butyl-, Hexyl-, Ethylhexyl-, Stearyl- und Lauryl(meth)acrylat genannt. Bevorzugt werden Gemische aus Alkyl(meth)acrylaten als Komponente (b1) eingesetzt, die zu mindestens 20 Gew.-%, bezogen auf (b1), aus n-Butyl- und/oder tert.-Butylacrylat und/oder aus n-Butyl- und/oder tert.-Butylmethacrylat bestehen. Als Komponente (b1) können auch Ethyltriglykol(meth)-acrylat und Methoxyoligoglykol(meth)acrylat mit zahlenmittleren Molekulargewichten Mn von vorzugsweise 550 Dalton oder andere ethoxylierte und/oder propoxylierte hyroxylgruppenfreie (Meth)acrylsäurederivate eingesetzt werden.

Als Komponente (b2) können mit (b1), (b3), (b4), (b5), (b6) und (b7) copolymerisierbare und von (b3) verschiedene, ethylenisch ungesättigte Monomere, die mindestens eine Hydroxylgruppe pro Molekül tragen und im wesentlichen carboxylgruppenfrei sind, oder ein Gemisch aus solchen Monomeren eingesetzt werden. Als Beispiele werden Hydroxyalkylester der Acrylsäure, Methacrylsäure oder einer anderen alpha,beta-ethylenisch ungesättigten Carbonsäure genannt. Diese Ester können sich von einem Alkylenglykol ableiten, das mit einer säure verestert ist, oder sie können durch Umesterung der Säure mit einem Alkylenoxid erhalten werden. Als Komponente (b2) werden vorzugsweise Hydroxyalkylester der (Meth)acrylsäure, in denen die Hydroxyalkylgruppe bis zu 20 C-Atome enthält, Umsetzungsprodukte aus cyclischen Estern, wie beispielsweise epsilon-Caprolacton und diesen Hydroxyalkylestern, oder Mischungen hieraus, eingesetzt.
Beispielhaft seien genannt: 2-Hydroxyethyl(meth)acrylat), 3-Hydroxypropyl(meth)acrylat), 2-Hydroxypropyl-(meth)acrylat, 4-Hydroxylbutyl(meth)acrylat) sowie Hydroxystearyl(meth)acrylat. Entsprechende Ester anderer ungesättigter säuren, wie z.B. Ethacrylsäure, Crotonsäure und ähnliche säuren mit bis zu 6 C-Atomen pro Molekül, können ebenfalls eingesetzt werden.
Ferner können als Komponente (b2) auch olefinisch ungesättigte Polyole eingesetzt werden. So kann als Komponente (b2) zumindestens teilweise Trimethylolpropanmonoallylether eingesetzt werden. Der Anteil an Trimethylolpropanmonoallylether beträgt in diesem Fall üblicherweise 2 bis 10 Gew.-% bezogen auf das Gesamtgewicht der zur Herstellung der Polyacrylatharzes (B) eingesetzten Monomeren (b1) bis (b7). Daneben ist es aber auch möglich, 2 bis 10 Gew.-%, bezogen auf (B), Trimethylolpropanmonoallylether zum fertigen Polyacrylatharz (B) zuzusetzen. Die olefinisch ungesättigten Polyole, wie insbesondere Trimethylolpropanmonoallylether, können als alleinige hydroxylgruppenhaltige Monomere (b2), insbesondere aber anteilsmäßig in Kombination mit anderen der genannten hydroxylgruppenhaltigen Monomeren (b2), eingesetzt werden.

Als Komponente (b3) wird das Umesterungsprodukt aus Acryl- und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelnamen "Cardura®" erhältlich. Die Umsetzung der (Meth)acrylsäure mit dem Glycidylester einer Carbonsäure mit einem teriären alpha-C-Atom kann vor, während oder nach der Polymerisationsreaktion erfolgen. Bevorzugt wird als Komponente (b3) das Umsetzungs-produkt von Acryl- und/oder Methacrylsäure mit dem Glycidylester der Versaticsäure eingesetzt. Dieser Glycidylester ist unter dem Handelsnamen "Cardura® E10" erhältlich.

Als Komponente (b4) kann jedes mindestens eine Carboxylgruppe pro Molekül tragende, mit (b1), (b2), (b3), (b5), (b6) und (b7) copolymerisierbare, ethylenisch ungesättigte Monomer oder ein Genisch aus solchen Monomeren eingesetzt werden. Vorzugsweise werden als (b4) Acryl- und/oder Methacrylsäure eingesetzt. Es können aber auch andere ethylenisch ungesättigte Säuren mit bis zu 6 C-Atomen im Molekül eingesetzt werden. Als Beispiele für solche Säuren seien genannt: Ethacrylsäure, Crotonsäure, Maleinsäure, Fumarsäure und Itaconsäure. Als Komponente (b4) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (b5) geeignet sind Polysiloxanmakromonomere, die ein zahlenmittleres Molekulargewicht Mn von 1.000 bis 40.000, bevorzugt von 2.000 bis 10.000 Dalton, und im Mittel 0,5 bis 2,5, bevorzugt 0,5 bis 2,0, ethylenisch ungesättigte Doppelbindungen pro Molekül oder im Mittel 0,5 bis 2,5, bevorzugt 0,5 bis 2,0, Epoxidgruppen pro Molekül aufweisen.

Geeignet sind beispielsweise die in der DE-A-38 07 571 auf den Seiten 5 bis 7, die in der DE-A-37 06 095 in den Spalten 3 bis 7, die in der EP-B-358 153 auf den Seiten 3 bis 6 und die in der US-A-4,754,014 in den Spalten 5 bis 9 beschriebenen Polysiloxanmakromonomere. Ferner sind auch andere Acryloxysilane enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsaure.

Bevorzugt werden als Komponente (b5) Polysiloxanmakromonomere der folgenden Formel eingesetzt: 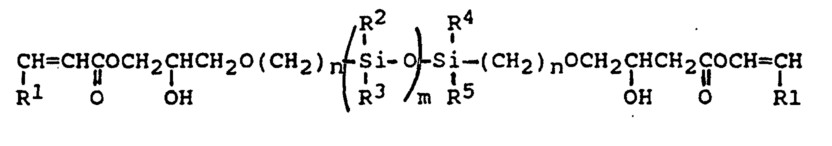 mit
- R¹ =: H oder CH₃
- R², R³, R⁴, R⁵ =: gleiche oder verschiedene aliphatische Kohlenwasserstoffreste mit 1 bis 8 C-Atomen, insbesondere Methyl, oder Phenylrest.
- n =: 2 bis 5, bevorzugt 3
- m =: 8 bis 80

Als Beispiel für ein derartiges Polysiloxanmakromonomer wird das α,ω-acryloxyorganofunktionelle Polydimethylsiloxan der Formel 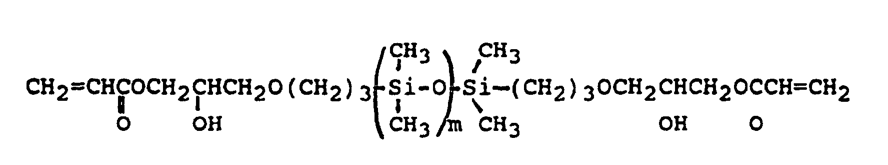 mit m ≈ 30 bis 50 eingesetzt.

Besonders bevorzugt wird als Polysiloxanmakromonomer ein acryloxyorganofunktionelles Siloxan mit einer Acryloxyfunktionalität < 2 eingesetzt. Als Beispiel sei ein Polysiloxan der folgenden Formel genannt: 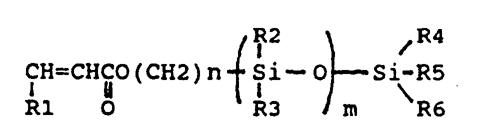 in welcher m ≈ 8 bis 80 und n = 1 bis 5 bedeutet und R1 Wasserstoff oder eine Methylgruppe, R2 und R3 gleiche oder verschiedene aliphatische Kohlenwasserstoffreste mit 1 bis 8 C-Atomen, insbesondere Methyl, oder einen Phenylrest und R4, R5 und R6 einen Halogenrest oder einen Alkoxyrest mit 1 bis 4 C-Atomen oder eine Hydroxylgruppe bedeuten.

Bevorzugt werden als Komponente (b5) auch Polysiloxanmakromonomere eingesetzt, die hergestellt worden sind durch Umsetzung von 70 bis 99,999 Mol-% einer Verbindung (1), dargestellt durch die Formel (I) 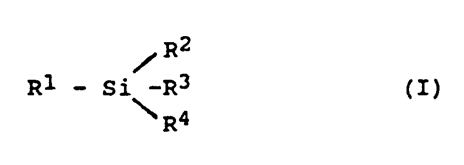 in welcher R¹ eine aliphatische Kohlenwasserstoffgruppe mit 1 bis 8 C-Atomen oder einen Phenylrest darstellt und R², R³ und R⁴ jeweils für einen Halogenrest oder einen Alkoxyrest mit 1 bis 4 C-Atomen oder eine Hydroxylgruppe stehen, mit 30 bis 0,001 Mol-% einer Verbindung (2), dargestellt durch die Formel (II) 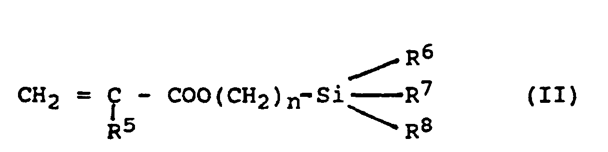 in welcher R⁵ ein Wasserstoffatom oder einen Methylrest darstellt, R⁶, R⁷ und R⁸ jeweils für Halogen, OH- oder einen Alkoxyrest mit 1 bis 4 C-Atomen oder eine aliphatische Kohlenwasserstoffgruppe mit 1 bis 8 C-Atomen stehen, wobei wenigstens einer der Reste R⁶, R⁷ oder R⁸ eine OH- oder eine Alkoxygruppe ist und n eine ganze Zahl von 1 bis 6 darstellt.

Beispiele für geeignete Verbindungen (1) und (2) sind in der WO 92/22615 auf Seite 13, Zeile 18 bis Seite 15, Zeile 9, genannt.

Die Reaktion zwischen den Verbindungen (1) und (2) wird bewerkstelligt durch die dehydratisierende Kondensation der Hydroxylgruppen, die in diesen Verbindungen enthalten sind und/oder der Hydroxylgruppen, die auf die Hydrolyse der Alkoxygruppen dieser Verbindungen zurückzuführen sind. In Abhängigkeit von den Reaktionsbedingungen beinhaltet die Umsetzung zusätzlich zu den Dehydratisierungsreaktion eine dealkoholisierende Kondensation. Falls die Verbindungen (1) oder (2) Halogenreste enthalten, wird die Reaktion zwischen (1) und (2) bewerkstelligt durch Dehydrohalogenierung.

Die Bedingungen, unter denen die Reaktion zwischen der Verbindung (1) und der Verbindung (2) durchgeführt wird, sind ebenfalls in der internationalen Patentanmeldung mit der internationalen Veröffentlichungsnummer WO 92/22615 auf der Seite 15, Zeile 23, bis Seite 18, Zeile 10, beschrieben.

Besonders bevorzugt wird als Komponente (b5) das im Handel unter der Bezeichnung AK 5 der Firma Toagosei Chemical Industries Co., Ltd. (in Deutschland vertreten durch die Firma Marubeni) erhältliche Polysiloxanmakromonomer mit 0,5 bis 1,5, im Mittel mit einer Methacryloylendgruppe und mit einem zahlenmittleren Molekulargewicht von 5.000 eingesetzt.

Geeignet sind ferner auch epoxyfunktionelle Polysiloxanmakromonomere der folgenden Formel: 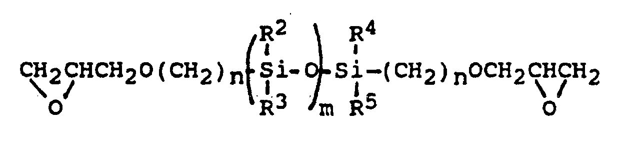 mit
- R², R³, R⁴, R⁵ =: gleiche oder verschiedene aliphatische Kohlenwasserstoffreste mit 1 bis 8 C-Atomen, insbesondere Methyl, oder Phenylrest.
- n =: 2 bis 5, bevorzugt 3
- m =: 8 bis 80.

Besonders bevorzugt wird das epoxyfunktionelle Polydimethylsiloxan der Formel 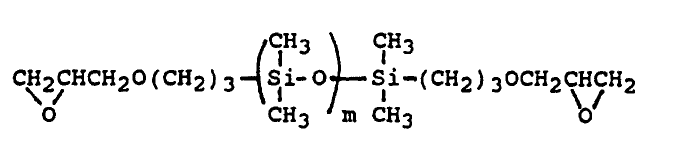 mit m = 50 und einem Epoxyäquivalentgewicht von 1900 eingesetzt. Dieses Polysiloxanmakromonomer ist beispielsweise unter der Bezeichnung Versuchsprodukt TEGOMER® E-Si 2530 der Firma Th. Goldschmidt im Handel erhältlich.

Als Komponente (b5) geeignet sind ferner auch die im Handel unter den folgenden Namen erhältlichen Produkte: Polysiloxanmakromonomer AK 30 der Firma Toagosei Chemical Industries Co., Ltd. (in Deutschland vertreten durch die Firma Marubeni) sowie verschiedene, unter den Bezeichnungen TEGOMER® E-Si und TEGOMER® V-Si vertriebene Produkte der Firma Th. Goldschmidt.

Als Komponente (b6) werden vinylaromatische Kohlenwasserstoffe, wie Styrol, alpha-Alkylstyrole, wie alpha-Methylstyrole, Chlorstyrole, o-, m-, p-Methylstyrol, 2,5-Dimethylstyrol, p-Methoxystyrol, p-tert.-Butylstyrol, p-Dimethylaminostyrol, p-Acetamidostyrol und Vinyltoluol, eingesetzt, wobei bevorzugt Vinyltoluole und insbesondere Styrol eingesetzt werden.
Als Komponente (b7) können alle mit (b1), (b2), (b3), (b4), (b5) und (b6) copolymerisierbaren, von (b1), (b2), (b3), (b4), (b5) und (b6) verschiedenen, im wesentlichen carboxylgruppenfreien ethylenisch ungesättigten Monomere oder Gemische aus solchen Monomeren eingesetzt werden. Als Komponente (b7) werden vorzugsweise Alkoxyalkylacrylate und -methacrylate, mono- und polycyclische aliphatische Ester der Methacrylsäure und/oder Acrylsäure, vorzugsweise Cyclohexylacrylat, Cyclohexylmethacrylat, 4-tert.-Butylcyclohexylacrylat, 4-tert.-Butylcyclohexylmethacrylat, Isobornylacrylat und Isobornylmethacrylat, insbesondere 4-tert.-Butylcyclohexylacrylat und/oder 4-tert.-Butylcyclohexylmethacrylat, Vinylester sowie Alkylester ethylenisch ungesättigter Carbonsäuren, ausgenommen Alkylester der Acryl- und Methacrylsäure, wie z.B. Alkylester der Croton-, Isocroton- und Maleinsäure, eingesetzt.

Besonders bevorzugt eingesetzte Acrylatharze werden erhalten durch Polymerisation von
b1) 5 bis 74 Gew.-%, bevorzugt 5 bis 30 Gew.-%, der Komponente (b1),
(b2) 10 bis 40 Gew.-%, bevorzugt 15 bis 25 Gew.-%, der Komponente (b2),
(b3) 0 bis 50 Gew.-%, bevorzugt 10 bis 50 Gew.-%, der Komponente (b3),
(b4) 0 bis 10 Gew.-%, bevorzugt 0,1 bis 6 Gew.-%, der Komponente (b4),
(b5) weniger als 5 Gew.-%, bevorzugt weniger als 3 Gew.-%, besonders bevorzugt 0,1 bis 1 Gew.-% und ganz besonders bevorzugt 0,3 bis 0,7 Gew.-%, der Komponente (b5),
(b6) 5 bis 40 Gew.-%, bevorzugt 10 bis 30 Gew.-%, der Komponente (b6) und
(b7) 0 bis 40 Gew.-%, bevorzugt 0 bis 30 Gew.-%, der Komponente (b7),
wobei die Summe der Gewichtsanteile der Komponenten (b1) bis (b7) jeweils 100 Gew.-% beträgt.

Die erfindungsgemäß eingesetzten Polyacrylatharze (B) weisen üblicherweise eine OH-Zahl von 60 bis 200, bevorzugt von 100 bis 160 mgKOH/g, eine Säurezahl von 1 bis 60, bevorzugt 1 bis 15 mgKOH/g sowie ein zahlenmittleres Molekulargewicht Mn von 1.000 bis 5.000, bevorzugt von 1.500 bis 4.000, jeweils gelpermeationschromatographisch bestimmt gegen Polystyrolstandard, auf.

Die Herstellung der erfindungsgemäß eingesetzten Polyacrylatharze (B) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen Lösemittel und Polymerisationsinitiatoren eingesetzt.
Als Beispiele für brauchbare Lösemittel werden Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Alkohole, Ether und Ester, wie z.B. Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, 2-Hydroxypropionsäureethylester und 3-Methyl-3-methoxybutanol sowie Derivate auf Basis von Propylenglykol, z.B. Ethylethoxypropionat, Methoxypropylacetat und ähnliche, genannt.

Als Beispiele für brauchbare Polymerisationsinitiatoren werden freie Radikale bildende Initiatoren, wie z.B.tert.-Butylperacetat, tert.-Butylperethylhexanoat, Benzoylperoxid, Azobisisobutyronitril und tert.-Butylperbenzoat genannt. Die Polymerisation wird zweckmäßigerweise bei einer Temperatur von 80 bis 200°C, vorzugsweise 110 bis 160°C, durchgeführt. Bevorzugt werden als Lösemittel Shellsol® A, Solvent Naphtha® und Butylacetat eingesetzt.

Zur Herstellung des Polyacrylatharzes (B) werden bevorzugt mindestens 60 Gew.-%, besonders bevorzugt 100 Gew.-% der Gesamtmenge der Komponente (b3) zusammen mit einem Teil des Lösemittels in die Vorlage gegeben und auf die jeweilige Polymerisationstemperatur aufgeheizt. Die übrigen Monomeren werden dann bei der Polymerisationstemperatur gleichmäßig zudosiert. Werden als Komponente (b5) Polysiloxanmakromonomere mit einer geringen Reaktivität eingesetzt (Funktionalität < 2), so werden ebenfalls bevorzugt mindestens 60 Gew.-%, besonders bevorzugt 100 Gew.-%, der Gesamtmenge dieses Polysiloxanmakromonomers (b5) in die Vorlage gegeben. Werden dagegen Polysiloxanmakromonomere (b5) mit einer höheren Reaktivität eingesetzt (Funktionalität > 2), so werden diese Polysiloxanmakromonomere bevorzugt zusammen mit den übrigen Monomeren zugegeben.

Dieses spezielle Polymerisationsverfahren fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt ergeben.

### Die Polyisocyanatkomponente (C)

Bei der Polyisocyanatkomponente (C) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-l-methylcyclohexan, 3-Isocyanatomethyl-3,5,5-trimethylcyclohexylisocyanat("Isophorondiisoyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-l,4-diethylbenzol, 1,3- und 1,4-Phenylendiisocyanat, 4,4'-Diisocyanatodiphenyl, 4,4'-Diisocyanato-3,3'-dichlordiphenyl, 4,4'-Diisocyanato-3,3'-dimethoxydiphenyl, 4,4'-Diisocyanato-3,3'-dimethyldiphenyl, 4,4'-Diisocyanato-3,3'-diphenyl-diphenyl, 2,4'- und 4,4'-Diisocyanatodiphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4''-Triisocyanatotriphenylmethan. Bevorzugt werden, ggf. in Kombination mit den o.g. Isocyanaten, Isocyanuratgruppen und/oder Biuretgruppen und/oder Allophanatgruppen und/oder Uretdiongruppen und/oder Urethangruppen und/oder Harnstoffgruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (C) kann im übrigen auch aus beliebigen Gemischen der beispielhaft genannten Polyisocyanate bestehen.
Die Menge des eingesetzten Vernetzers (C) wird so gewählt, daß das Verhältnis der Isocyanatgruppen des Vernetzers (C) zu den Hydroxylgruppen der Komponenten (A) und (B) im Bereich von 3 : 1 bis 1 : 3 liegt. üblicherweise enthalten die erfindungsgemäßen Beschichtungsmittel 15 bis 45 Gew.-% Harzkomponenten (A) und (B) sowie 6 bis 20 Gew.-% des Vernetzungsmittels (C), jeweils bezogen auf das Gesamtgewicht des Beschichtungsmittels und bezogen auf den Festkörpergehalt der Komponenten (A), (B) und (C).

### Die Beschichtungsmittel

Die erfindungsgemäßen Beschichtungsmittel können neben den Komponenten (A), (B) und (C) gegebenenfalls ein oder mehrere hydroxylgruppenhaltige Harze enthalten, wodurch beispielsweise die Lösemittelbeständigkeit und die Härte der resultierenden Beschichtung weiter verbessert werden können. Beispielsweise können sie weitere, von den oben beschriebenen Harzen (A) und (B) verschiedene, hydroxylgruppenhaltige Acrylatharze und/oder Polykondensationsharze (insbesondere Polyester) enthalten.
Üblicherweise werden diese weiteren Bindemittel in einer Menge von 0 bis 20 Gew.-%, jeweils bezogen auf das Gesamtgewicht des Beschichtungsmittels und bezogen auf den Festkörpergehalt des Bindemittels, eingesetzt. Beispiele für solche geeigneten weiteren Bindemittel sind beispielsweise die im Handel unter dem Namen Macrynal® SM 510 und SM 513 der Firma Hoechst erhältliche Polyacrylatharze.

Die erfindungsgemäßen Beschichtungsmittel enthalten ferner ein oder mehrere organische Lösemittel. Diese Lösemittel werden üblicherweise in Mengen von 20 bis 70 Gew.-%, bevorzugt von 25 bis 65 Gew.-%, jeweils bezogen auf das Gesamtgewicht des Beschichtungsmittels, eingesetzt.
Beispiele für geeignete Lösemittel sind: höher substituierte Aromaten, wie beispielsweise Solvent Naphtha®, Schwerbenzol, verschiedene Solvesso®-Typen, verschiedene Shellsol®-Typen und Deasol®, sowie höhersiedende aliphatische und cycloaliphatische Kohlenwasserstoffe, wie z.B. verschiedene Testbenzine, Mineralterpentinöl, Tetralin und Dekalin, sowie verschiedene Ester, wie beispielsweise Ethylglykolacetat, Butylglykolacetat, Ethylglykoldiacetat und ähnliche.

Die erfindungsgemäßen Beschichtungsmittel können gegebenenfalls außerdam noch übliche Pigmente und/oder Füllstoffe in üblichen Mengen enthalten. In diesem Fall werden die Füllstoffe und/oder Pigmente bevorzugt in einer Menge von 0 bis 40 Gew.-%, bezogen auf das Gesamtgewicht des Beschichtungsmittels, eingesetzt. Beispiele für geeignete Pigmente sind organische und anorganische Farbpigmente sowie Metall- und/oder Effektpigmente.

Die erfindungsgemäßen Beschichtungsmittel können außerdem übliche Hilfs- und Zusatzstoffe in üblichen Mengen, bevorzugt 0,01 bis 10 Gew.-%, bezogen auf das Gesamtgewicht des Beschichtungsmittels, enthalten. Beispiele für solche Hilfs- und Zusatzstoffe sind Verlaufsmittel, wie Siliconöle, Weichmacher, wie Phosphorsäureester und Phthalsäureester, viskositätskontrollierende Zusätze, Mattierungsmittel, UV-Absorber, Lichtschutzmittel und gegebenenfalls Füllstoffe.

Die Herstellung der Beschichtungsmittel erfolgt in an sich bekannter Weise durch Mischen und gegebenenfalls Dispergieren der einzelnen Komponenten.
Diese Beschichtungsmittel können durch Streichen, Spritzen, Fluten, Tauchen, Walzen oder Rakeln auf ein Substrat in Form eines Films aufgebracht werden, wobei der Film anschließend zu einem festhaftenden Überzug ausgehärtet wird.

Die Aushärtung der Beschichtungsmittel erfolgt üblicherweise bei Raumtemperatur oder leicht erhöhter Temperatur, vorteilhafterweise bei Temperaturen unterhalb 120 Grad C, bevorzugt bei Temperaturen unterhalb 80 Grad C, sowie bevorzugt bei Temperaturen oberhalb 60 Grad C. Die Beschichtungsmittel können aber auch unter Einbrennbedingungen, das heißt bei Temperaturen von mindestens 120 Grad C, gehärtet werden.

Als Substrate eignen sich insbesondere Metalle sowie Holz, Kunststoffe, Glas oder ähnliche.

Aufgrund der kurzen Härtungszeiten und niedrigen Härtungstemperaturen werden die erfindungsgemäßen Beschichtungsmittel bevorzugt für die Autoreparaturlackierung sowie für die Lackierung von Großfahrzeugen und LKW-Aufbauten verwendet. Sie können aber- je nach eingesetztem Vernetzer (C) - auch für die Automobilserienlackierung eingesetzt werden. Desweiteren eignen sie sich als Klarlack, insbesondere über einer Metallic-Basislackschicht oder einer Uni-Basislackschicht, sowie insbesondere als pigmentierter Decklack.

Gegenstand der vorliegenden Erfindung ist daher auch ein Verfahren zur Herstellung eines mehrschichtigen schützenden und/oder dekorativen Uberzugs auf einer Substratoberfläche, bei dem
(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basischicht ein transparenter Decklack, enthaltend:
   (A) ein polyestermodifiziertes Polyacrylatharz,
   (B) ein hydroxylgruppenhaltiges Polyacrylatharz und
   (C) ein Vernetzungsmittel,
   aufgebracht wird und anschließend
(4) Basislackschicht und Decklackschicht zusammen gehärtet werden,
dadurch gekennzeichnet, daß als Decklack das erfindungsgemäße Beschichtungsmittel eingesetzt wird.

Die in diesem Verfahren eingesetzten Basislacke sind bekannt und brauchen daher nicht näher erläutert zu werden. Beispiele für geeignete Basislacke finden sich in DE-A-41 10 520, DE-A-40 09 000, DE-A-40 24 204, EP-A-355 433, DE-A-35 45 618, DE-A-38 13 866 und der DE-A-42 32 717.
Geeignet sind außerdem die in der veröffentlichten DE-A-43 27 416 beschriebenen Basislacke, die dadurch gekennzeichnet sind, daß sie einen hydroxylgruppenhaltigen Polyester, mit einem gewichtsmittleren Molekulargewicht Mw von 40.000 bis 200.000 Dalton und einer Uneinheitlichkeit Mw/Mn > 8, enthalten und daß zur Herstellung des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei sich die Gew.-%-Angaben jeweils auf das Gesamtgewicht der zur Herstellung des Polyesters eingesetzten Säurekomponenten bezogen sind.
Mit dem erfindungsgemäßen Beschichtungsmittel können auch oxidativ trocknende, pigmentierte oxidativ trocknende sowie pigmentierte 2-Komponenten-Polyurethanlacke, die üblicherweise im Bereich der der gegebenenfalls einschichtigen Autoreparaturlackierung eingesetzt werden, überlackiert werden. Auch in diesem Falle werden Beschichtungen mit den gewünschten vorteilhaften Eigenschaften erhalten.

In den folgenden Beispielen wird die Erfindung näher erläutert. Alle Angaben über Teile und Prozente sind Gewichtsangaben, sofern nicht ausdrücklich etwas anderes angegeben wird.

### Beispiele:

### I.1. Herstellung des Polyesterharzes a11:

In einem 4-Liter-Polykondensationskessel mit Rührer, dampfbeheizter Kolonne und Wasserabscheider werden 796 Teile Trimethylolpropan, 540 Teile Isononansäure, 821 Teile Phthalsäureanhydrid und 83 Teile Xylol gegeben und langsam aufgeheizt. Es wird bei einer Temperatur von max. 190 Grad C bis zu einer Säurezahl von 5 mgKOH/g und einer Viskosität 8,0 dPas (60 %ig in Xylol) kondensiert. Anschließend wird gekühlt und bei 130 Grad C mit 910 Teilen Shellsol® A angelöst sowie weiter auf Raumtemperatur gekühlt.
Der so erhaltene Polyester hat einen Festkörper von 66,5 %, eine Säurezahl von 5 mg KOH/g, eine (theoretische) OH-Zahl von 97,2 mg KOH/g und eine Viskosität von 70 dPa·s (original). Das zahlenmittlere Molekulargewicht Mn beträgt 1.493, das gewichtsmittlere Molekulargewicht Mw beträgt 13.243 und die Uneinheitlichkeit Mw/Mn beträgt 8,87 (jeweils gelpermeationschromatographisch bestimmt gegen Polystyrolstandard).

### I.2. Herstellung eines Polyesterharzes a12:

In einem 4-Liter-Polykondensationskessel mit Rührer, dampfbeheizter Kolonne und Wasserabscheider werden 796 Teile Trimethylolpropan, 540 Teile Isononansäure, 821 Teile Phthalsäureanhydrid und 83 Teile Xylol gegeben und langsam aufgeheizt. Es wird bei einer Temperatur von max. 190 Grad C bis zu einer Säurezahl von 15 mgKOH/g und einer Viskosität 5,3 dPa·s (60 %ig in Xylol) kondensiert. Anschließend wird gekühlt und bei 130 Grad C mit 910 Teilen Shellsol® A angelöst sowie weiter auf Raumtemperatur gekühlt.

Der so erhaltene Polyester hat einen Festkörper von 66,5 %, eine Säurezahl von 13 mg KOH/g, eine (theoretische) OH-Zahl von 104 mg KOH/g und eine Viskosität von 22 dPas (original). Das zahlenmittlere Molekulargewicht Mn beträgt 1.241, das gewichtsmittlere Molekulargewicht MW beträgt 5.843 und die Uneinheitlichkeit Mw/Mn beträgt 4,71 (jeweils gelpermeationschromatographisch bestimmt gegen Polystyrolstandard).

### II.1. Herstellung der polyestermodifizierten Acrylatharze A1 und A2

Die Herstellung der Acrylatcopolymerisate erfolgte jeweils in einem 4-Liter-Edelstahlpolymerisationskessel mit Rührer, Rückflußkühler, einem Monomerenzulauf und einem Initiatorzulauf. Die jeweils in der Tabelle 1 angegebenen Komponenten werden eingewogen und dann die Vorlage auf 165 Grad C aufgeheizt.
Mit dem Start aller Zuläufe wird gleichzeitig begonnen, innerhalb von 4 h wird der Monomerenzulauf gleichmäßig zudosiert, innerhalb von 5 h wird der Initiatorzulauf gleichmäßig zudosiert. Während der Polymerisation wird die Temperatur im Kessel auf 160 - 165 Grad C gehalten. Danach wird noch 2 h nachpolymerisiert. Die so erhaltene Acrylatharzlösung hat einen Festkörper von 80 %. Anschließend wird die Temperatur auf 120 Grad C gesenkt und das Acrylatharz mit Butylacetat auf 65 % Festkörper angelöst sowie mit der in der Tabelle 1 angegebenen Menge Benzoesäure oder der in Tabelle 1 angegebenen Menge tert.-Butylbenzoesäure oder Hydroxystearinsäure versetzt.
In die Vorlage werden die jeweils in Tabelle 1 angegebenen Mengen des Polyesterharzes a11 oder a12 sowie die in der Tabelle 1 angegebene Menge des handelsüblichen Vinylesters der Versaticsäure (Handelsprodukt VeoVa 10 ® der Firma Shell Chemie) eingewogen.
In den Monomerenzulauf werden die jeweils in der Tabelle 1 angegebenen Mengen Styrol, OH-Monomer und Methylmethacrylat eingewogen.
In den Initiatorzulauf werden
14 Teile Di-tert.Butylperoxid,
44 Teile Shellsol® A (handelsübliches, aromatisches Lösemittelgemisch mit einem Siedebereich von 165 bis 185 °C) und
25 Teile Xylol
eingewogen. Diese Zusammensetzung des Initiatorzulaufs wird zur Herstellung sämtlicher Acrylatharze eingesetzt.

### II.2. Herstellung des polyestermodifizierten Acrylatharzes A3

Die Herstellung des erfindungsgemaßen Acrylatcopolymerisats erfolgte jeweils in einem 4-Liter-Edelstahlpolymerisationskessel mit Rührer, Rückflußkühler, einem Monomerenzulauf und einem Initiatorzulauf. Die in Tabelle 1 angegebenen Komponenten der Vorlage, des Monomerenzulaufs und des Initiatorzulaufs werden eingewogen und dann die Vorlage auf 165 Grad C aufgeheizt.

Mit dem Start aller Zuläufe wird gleichzeitig begonnen, innerhalb von 4 h wird der Monomerenzulauf gleichmäßig zudosiert, innerhalb von 5 h wird der Initiatorzulauf gleichmäßig zudosiert. Während der Polymerisation wird die Temperatur im Kessel auf 160 - 165 Grad C gehalten. Danach wird noch 2 h nachpolymerisiert. Die so erhaltene Acrylatharzlösung hat einen Festkörper von 80 %. Bei 165 Grad C werden 7,5 Teile Phthalsäureanhydrid zugegeben und die Temperatur noch ca. 2 Stunden bei 165 Grad C gehalten. Anschließend wird die Temperatur auf 120 Grad C gesenkt und das Acrylatharz mit Butylacetat auf 65 % Festkörper angelöst.
Das auf diese Weise erhaltene Polyacrylatharz hat einen Festkörper von 64,4 %, eine Säurezahl von 4,4 mgKOH/g, eine Viskosität von 3,0 dPa·s (55%ig in Butylacetat) und eine Hydroxylzahl von ca. 90.

In der folgenden Tabelle 1 sind die Zusammensetzungen der polyestermodifizierten Polyacrylate A1 bis A3 angegeben:

**Tabelle 1:**

| Zusammensetzung der polyestermodifizierten Polyacrylate A1 bis A3 in Gewichtsteilen | | | |
|---|---|---|---|
| | A1 | A2 | A3 |
| a11 | 700 | - | 700 |
| a12 | - | 700 | - |
| | | | |
| VeoVa | 70 | 70 | 70 |
| Styrol | 350 | 350 | 350 |
| HBA | 155 | - | 155 |
| HEMA | - | 140 | - |
| | | | |
| | | | |
| MMA | 125 | 140 | 125 |
| | | | |
| BS | 5 | 5 | - |
| PSA | - | - | 7,5 |
| | | | |
| | | | |
| Erläuterungen zu Tabelle 1: | | | |
| a11, a12 = Polyesterharz a11 bzw. a12 | | | |
| VeoVa = handelsübliches Gemisch von Vinylestern von gesättigten aliphatischen Monocarbonsäuren mit überwiegend 10 C-Atomen, die am alpha-Atom verzweigt sind | | | |
| HBA = 4-Hydroxy-n-butylacrylat | | | |
| HEMA = Hydroxyethylmethacrylat | | | |
| MMA = Methylmethacrylat | | | |
| BS = Benzoesäure | | | |
| PSA = Phthalsäureanhydrid | | | |

**Tabelle 2:**

| Kennzahlen der polyestermodifizierten Polyacrylate A1 bis A3 | | | |
|---|---|---|---|
| | A1 | A2 | A3 |
| FK (%) | 65 | 66 | 64,4 |
| SZ | 5,3 | 4,5 | 4,4 |
| OHZ | 90 | 90 | 90 |
| Visk. | 2,3 | 2,5 | 3,0 |
| Mn | 2282 | 2400 | 2282 |
| Mw | 11414 | 12552 | 11414 |
| Mw/Mn | 5,00 | 5,23 | 5,00 |
| Erläuterungen zu Tabelle 2: | | | |
| FK = Festkörpergehalt in Gew.-% | | | |
| SZ = Säurezahl in mg KOH/g | | | |
| OHZ = OH-Zahl in mg KOH/g | | | |
| Visk. = Viskosität in dPa s | | | |
| Mn = zahlenmittleres Molekulargewicht bestimmt per Gelpermeationschromatographie mit Polystyrol als Standard | | | |
| Mw = gewichtsmittleres Molekulargewicht bestimmt per Gelpermeationschromatographie mit Polystyrol als Standard | | | |
| Mw/Mn = Uneinheitlichkeit der Molekluargewichtsverteilung | | | |

### III.1. Herstellung der hydroxylgruppenhaltigen, siloxanmodifizierten Acrylatharze B1 bis B3:

Die Herstellung der Acrylatcopolymerisate erfolgte jeweils in einem 4-Liter-Edelstahlpolymerisationskessel mit Rührer, Rückflußkühler, einem Monomerenzulauf und einem Initiatorzulauf. Die jeweils in der Tabelle 3 angegebenen Komponenten werden eingewogen und dann die Vorlage auf 145 Grad C aufgeheizt.

Mit dem Start aller Zuläufe wird gleichzeitig begonnen, innerhalb von 4 h wird der Monomerenzulauf gleichmäßig zudosiert, innerhalb von 4,5 h wird der Initiatorzulauf gleichmäßig zudosiert. Der Initiatorzulauf endet 30 min nach Ende des Monomerenzulaufs. Während der Polymerisation wird die Temperatur im Kessel auf 142 - 145 Grad C gehalten. Danach wird noch 2 h nachpolymerisiert. Die so erhaltene Acrylatharzlösung hat einen Festkörper von 70 %. Anschließend wird die Temperatur auf 120 Grad C gesenkt und das Acrylatharz mit der angegebenen Lösemittelmischung auf 54 % Festkörper angelöst.

In die Vorlage werden die jeweils in Tabelle 3 angegebenen Mengen Shellsol A ® (handelsübliches, aromatisches Lösemittelgemisch mit einem Siedebereich von 165 bis 185 Grad C der Firma Shell Chemie), die jeweils in Tabelle 3 angegebene Menge an Siloxanmonomer sowie die in der Tabelle 3 angegebene Menge des handelsüblichen Glycidylesters der Versaticsaure (Handelsprodukt Cardura E 10 ® der Firma Shell Chemie) eingewogen. In den Monomerenzulauf werden die jeweils in der Tabelle 3 angegebenen Mengen Methylmethacrylat, Styrol, OH-Monomer, Acrylsäure und Mercaptoethanol eingewogen.

In den Initiatorzulauf werden die in Tabelle 3 angegebenen Mengen Di-tert.Butylperoxid und Xylol eingewogen.

Die zur Anlösung des Acrylatharzes eingesetzte Lösemittelmischung weist folgende Zusammensetzung auf:
334 Teile Xylol
1429 Teile Butylacetat
60 Teile Butoxyl (handelsübliches Lösemittel der Firma Hoechst AG: Acetat des 2-Methoxybutanols)
128 Teile Butylglykolacetat

### III.2. Herstellung des hydroxylgruppenhaltigen Acrylatharzes VB1

Die Herstellung des hydroxylgruppenhaltigen Acrylatharzes VB1 erfolgt analog zur Herstellung der Acrylatharze B1 bis B3, allerdings mit dem Unterschied, daß die nach der Nachpolymerisation erhaltene Acrylatharzlösung einen Festkörpergehalt von 50 ± 2 % aufweist. Ein Zusatz der Lösemittelmischung war daher nicht erforderlich.

### III.3. Herstellung des hydroxylgruppenhaltigen Acrylatharzes VB2

Die Herstellung des Acrylatcopolymerisates VB2 erfolgte jeweils in einem 4-Liter-Edelstahlpolymerisationskessel mit Rührer, Rückflußkühler, einem Monomerenzulauf und einem Initiatorzulauf. Die jeweils angegebenen Komponenten werden eingewogen und dann die Vorlage auf 110 Grad C aufgeheizt.
Mit dem Start aller Zuläufe wird gleichzeitig begonnen; innerhalb von 3 h wird der Monomerenzulauf gleichmäßig zudosiert; innerhalb von 3.5 h wird der Initiatorzulauf gleichmäßig zudosiert. Der Initiatorzulauf endet 30 Minuten nach Ende des Monomerzulaufes. Während der Polymerisation wird die Temperatur im Kessel auf 110 Grad C gehalten. Danach wird noch 2 h nachpolymerisiert. Die so erhaltene Acrylatharzlösung hat einen Festkörper von 50 ± 2 %.

Das auf diese Weise erhaltene Polyacrylatharz hat einen Festkörper von 51,2 %, eine Säurezahl von 9.6 gKOH/g, eine Viskosität von 60 dPa·s (original) und eine Hydroxylzahl von ca. 128.

### Vorlage:

955.5 Teile Xylol
409.5 Teile Butylacetat

### Monomerenzulauf A:

37.7 Teile Siloxanmakromonomer AK 5® (Produkt der Marubeni)(40 %ig in Methylethylketon/Toluol)
615 Teile Methylmethacrylat
225 Teile Hydroxylethylmethacrylat
630 Teile n-Butylmethacrylat
15 Teile Acrylsäure

### Initiatorzulauf:

37.5 Teile tert.-Butylcumylperoxid
150 Teile Xylol

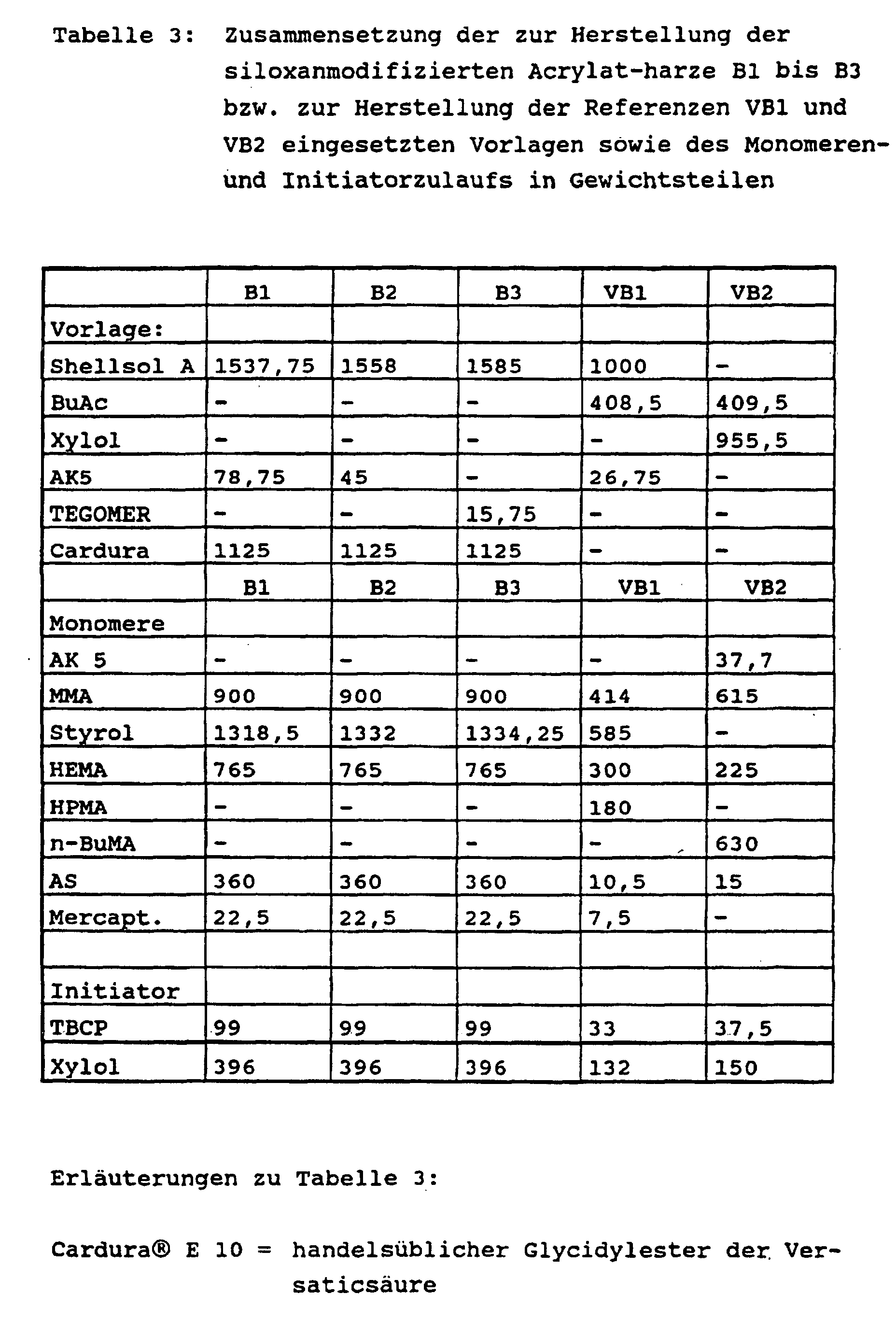

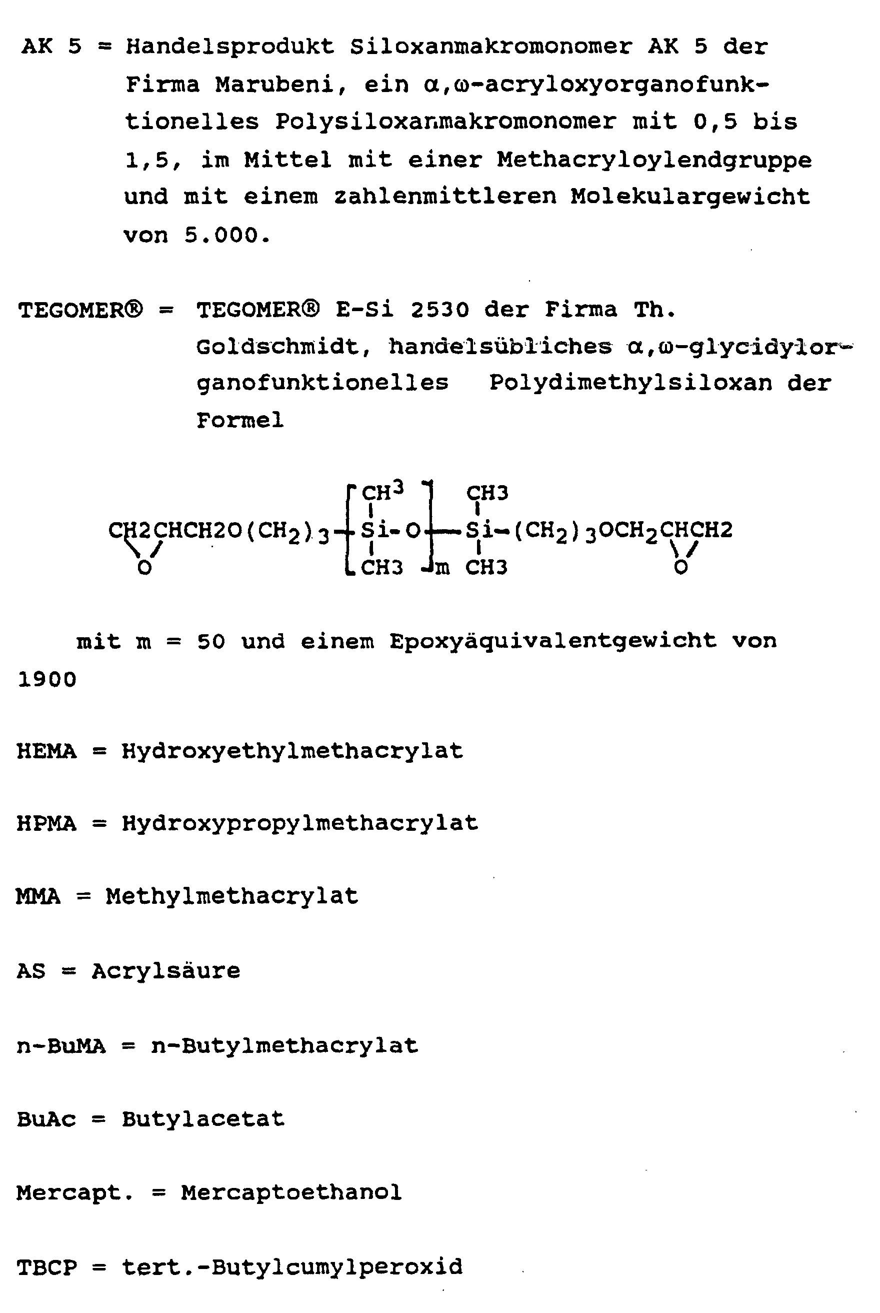

### IV. Herstellung der Beschichtungsmittel E1 bis E4 und V1 bis V4 (Vergleichsbeispiele):

### IV.1 Herstellung der Härterlösung

Aus den nachfolgend angegebenen Komponenten werden durch Mischen Härterlösungen hergestellt:
4 Teile Katalysatorlösung nach IV.3
50,6 Teile Desmodur® N 3390 *
10,0 Teile Solventnaphtha®
7,5 Teile Xylol
1,5 Teile n-Butylacetat 98/100
0,6 Teile Baysilon® Lackadditiv OL44 **
14,0 Teile 1-Methoxypropylacetat-2
11,0 Teile Butylglykolacetat

* : Handelsübliches Polyisocyanat der Firma Bayer AG, eine 90%-ige Lösung in Butylacetat/Solventnaphtha 1:1 eines Trimerisats auf Basis Hexamethylendiisocyanat mit einem zahlenmittleren Molekulargewicht Mn von ca. 700 Dalton, einer durchschnittlichen Funktionalität zwischen 3 und 4 und einem Uretdiongruppengehalt von maximal 5%;

** : Handelsübliches Verlaufsmittel auf Basis eines polyethermodifizierten Methylpolysiloxans der Firma Bayer AG.

### IV.2. Herstellung eines Einstellzusatzes

Aus den nachfolgend angegebenen Komponenten wird durch Mischen ein Einstellzusatz hergestellt:
15,0 Teile Xylol
13,0 Teile Solventnaphtha®
10,0 Teile Benzin 135/180
3,0 Teile Butylglykolacetat
50,0 Teile n-Butylacetat 98/100
5,0 Teile 1-Methoxypropylacetat
2,0 Teile Butoxyl
2,0 Teile Dipentene

### IV.3 Herstellung einer Katalysatorlösung

1,0 Teile Dibutylzinndilaurat werden mit 50 Teilen Butylacetat und 49 Teilen Xylol gemischt.

### IV.4 Herstellung der Decklacke E1 bis E4 und V1 bis V4

Die Decklacke werden hergestellt, indem 40 Teilen des hydroxylgruppenhaltigen polyester-modifizierten Polyacrylatharzes A und 3 Teilen Butylacetat 98/100 und 6 Teilen eines organischen Rotpigments (Handelsprodukt Novopermrot® F2RK der Firma Hoechst AG) zugegeben werden. Nun wird zunächst 10 Minuten bei 2000 U/min dissolviert und anschließend unter Kühlung auf eine Kornfeinheit nach Hegmann von < 10 Mikrometern vermahlen. Danach wird eine Mischung aus 4 Teilen Butylacetat. 98/100, 20 Teilen des hydroxylgruppenhaltigen, siloxanmodifizierten Polyacrylats B (bzw. von einem nicht-siloxanmodifizierten Polyacrylat des Typs Macrynal® SM 510 der Firma Hoechst AG), 0,5 Teile eines handelsüblichen Lichtschutzmittels auf Basis eines sterisch gehinderten Amins (Handelsprodukt Tinuvin® 292 der Firma Ciba Geigy), 0,5 Teile der unter IV.3 beschriebenen Katalysatorlösung und 26 Teile des hydroxylgruppenhaltigen polyestermodifizerten Polyacrylatharzes A zugegeben und mit einem Rührer homogenisiert. In Tabelle 4 sind die Anteile der jeweiligen Komponenten A und B in den Lackformulierungen angeführt.

**Tabelle 4:**

| Anteile der Komponenten A und B in den Lackformulierungen | | | | | | | | |
|---|---|---|---|---|---|---|---|---|
| Lackformulierung rung Komponente A | E1 | E2 | E3 | E4 | V1 | V2 | V3 | V4 |
| (je 66 Gew.-%) Komponente B | A1 | A1 | A1 | A3 | A2 | A1 | A1 | A1 |
| (je 20 Gew.-%, M=Macrynal SM 510) | B1 | B2 | B3 | B1 | M | VB1 | VB2 | M |

Zur Herstellung der Decklacke werden jeweils 4 Vol.-Teile der so erhaltenen Mischung mit 1 Vol.-Teil der unter IV.1 beschriebenen Härterlösung und 1 Vol.-Teil des unter IV.2 beschriebenen Einstellzusatzes gemischt.

### IV.5 Applikation und Prüfung der Decklacke

Die solchermaßen erhaltenen Decklacke werden auf phosphatierte und gefüllerte Stahlbleche appliziert. Die phosphatierten Stahlbleche werden hierzu mit einem handelsüblichen konventionellen Füller (Handelsprodukt Glasurit® Grundfüller 283-1874 der Firma BASF Lacke + Farben AG) auf Basis eines epoxidgruppenhaltigen Bindemittels und eines aminofunktionellen Härters beschichtet und 1 h bei Raumtemperatur zwischengetrocknet.

Danach wird der Decklack in 2 Spritzgängen mit einer Zwischenablüftzeit von 15 Minuten appliziert und 16 h bei 20 Grad C getrocknet. Die Trockenfilmschichtdicke beträgt 50 bis 60 Mikrometer.

Die solchermaßen beschichteten Bleche werden dann den im folgenden beschriebenen Prüfungen unterzogen:

### 1. Oberflächentrocknung - Abklebtest

Der Decklack wird nach Applikationsanweisung auf eine gefüllerte Stahlblechtafel appliziert. Nach Trocknung wird ein Streifen Tesakreppband (5 cm Breite) und eine "Regupak"-Beschriftungsfolie aufgelegt.
Um ein definiertes Anpressen zu gewährleisten, wird der Tesakreppstreifen mit einer Anpreßrolle zweimal überrollt und die "Regupak"-Folie blasenfrei von Hand angepreßt.
Ein Stück Tesakreppstreifen bzw. Folie wird nach 1h, 3h, 6h und 24h entfernt und sofort sowie nach 60 Minuten die Markierung auf der Lackoberfläche beurteilt.

### Auswertung:

| Markierung | Kennzahl nach DIN 53320 |
|---|---|
| nicht markiert | 0 |
| sehr leicht markiert | 1 |
| leicht markiert | 2 |
| markiert | 3 |
| stark markiert | 4 |
| sehr stark markiert | 5 |

### 2. Verlauf

Die Stahlblechtafeln werden analog dem Abklebtest präpariert und visuell beurteilt.

### Auswertung:

| Verlauf | Kennzahl nach DIN 53320 |
|---|---|
| ausgezeichnet | 0 |
| sehr gut | 1 |
| gut | 2 |
| mäßig | 3 |
| schlecht | 4 |
| sehr schlecht | 5 |

### 3. Spritznebelaufnahme

Verwendet werden Spachteltafeln mit 6 Bohrungen mit einem Durchmesser von 8 mm im mittleren Bereich der Tafel.
Der Decklack wird nach zwei konventionell applizierten Spritzgängen ein drittes Mal keilförmig von links nach rechts, d.h. links - dickschichtiger Auftrag, rechts - dünnschichtiger Auftrag, eingespritzt. Nach 30 Minuten wird in die rechte Hälfte der Tafel eingenebelt. Während des Spritzauftrags und der Trocknung hängen die Tafeln senkrecht.
Zur Auswertung befinden sich die Spachteltafeln auf einer geneigten Haltevorrichtung in einem Winkel von 30 Grad.
Die rechte Seite der Spachteltafeln wird visuell beurteilt.

| Spritznebelaufnahme | Kennzahl nach DIN 53320 |
|---|---|
| ausgezeichnet | 0 |
| sehr gut | 1 |
| gut | 2 |
| mäßig | 3 |
| schlecht | 4 |
| sehr schlecht | 5 |

### 4. Lösemittelbeständigkeit

Prüftafeln werden analog dem Abklebtest präpariert.
Ein Papiertuch wird mit dem Lösemittel getränkt und mit 10 Doppelhüben und leichtem Andruck über die Oberfläche gewischt. Danach wird die Fläche mit einem separaten Tuch getrocknet und die Vermattung sofort visuell beurteilt.

### Auswertung:

| Vermattung | Kennzahl nach DIN 53320 |
|---|---|
| ausgezeichnet | 0 |
| sehr gut | 1 |
| gut | 2 |
| mäßig | 3 |
| schlecht | 4 |
| sehr schlecht | 5 |

### 5. Gleitwiderstand

Prüftafeln werden analog dem Abklebtest präpariert.

Auf den Prüftafeln wird ein Standardprüfkörper von 200 g Gewicht, in den 3 Kugeln zur Hälfte eingelassen sind, über einen Weg von 5 cm gezogen. Die entstehende Gleitreibung wird als analoges Signal auf einem Schreiber registriert.
Der sogenannte "Altek"-Wert ist ein Maß für die mit dem Schreibersignal korrelierte Gleitreibung.

**Tabelle 5:**

| Die Prüfergebnisse | | | | | | |
|---|---|---|---|---|---|---|
| Decklack | Prüfmethode Abklebtest | | Verlauf | Spritznebel | Lösem. beständ. | Altek |
| | Tesa | Regupak | | | | |
| E1 | 1-2 | 1-2 | 3 | 2 | 1 | 0,194 |
| E2 | 3 | 3 | 2-3 | 2 | 2 | 0,210 |
| E3 | 2 | 2 | 3 | 2 | 1 | 0,198 |
| E4 | 1-2 | 1-2 | 3 | 2 | 1 | 0,197 |
| V1 | 5 | 5 | 2 | 2 | 5 | 0,295 |
| V2 | 3 | 3 | 5 | 4 | 2 | 0,215 |
| V3 | 3 | 3 | 5 | 4 | 2 | 0,218 |
| V4 | 1-2 | 1-2 | 3 | 2 | 1 | 0,238 |

## Patentansprüche

1. Beschichtungsmittel BM, enthaltend
(A) 5 bis 60 Gew.-% mindestens eines polyester-modifizierten Polyacrylatharzes, bestehend aus:
(a1 ) 20 bis 60 Gew.-% mindestens eines Polyesters und
(a2) 40 bis 80 Gew.-% mindestens eines hydroxylgruppenhaltigen Polyacrylatharzes, das zumindestens teilweise in Gegenwart der Komponente (a1) hergestellt worden ist, wobei
1.) der Polyester (a1) eine OH-Zahl zwischen 90 und 130 mg KOH/g, eine Säurezahl von weniger als 10 mg KOH/g, ein zahlenmittleres Molekulargewicht Mn zwischen 1.300 und 3.500 Dalton und eine Uneinheitlichkeit zwischen 5 und 50 aufweist,
2.) das Polyacrylatharz (a2) ein oder mehrere Monomere, ausgewählt aus der Gruppe 4-Hydroxy-nbutylacrylat, 4-Hydroxy-n-butylmethacrylat, 3-Hydroxy-n-butylacrylat, 3-Hydroxy-n-butylmethacrylat und/oder Hydroxyethylmethacrylat, einpolymerisiert enthält,
3.) das Polyacrylatharz (a2) eine OH-Zahl zwischen 50 und 150 mg KOH/g und eine Säurezahl zwischen 0 und 10 mg KOH/g aufweist,
4.) der Komponente (A) nach ihrer Herstellung oder dem Beschichtungsmittel 0,1 bis 1 Gew.-%, bezogen auf das Gewicht der Komponente (A) ohne Lösemittel, mindestens einer aromatischen Mono- und/oder Polycarbonsäure und/oder eines Anhydrids einer aromatischen Polycarbonsäure zugesetzt werden und
(B) 1 bis 35 Gew.-% mindestens eines hydroxylgruppenhaltigen, siloxanmodifizierten Polyacrylatharzes, bestehend aus:
(b1) ein von (b2), (b3), (b4), (b5), (b6) und verschiedener, mit (b2), (b3), (b4), (b5), (b6) und (b7) copolymerisierbarer, im wesentlichen carboxylgruppenfreier (Meth)acrylsäureester oder ein Gemisch aus solchen Monomeren,
(b2) ein mit (b1), (b3), (b4), (b5), (b6) und (b7) copolymerisierbares, von (b3) verschiedenes, ethylenisch ungesättigtes Monomer, das mindestens eine Hydroxylgruppe pro Molekül trägt und im wesentlichen carboxylgruppenfrei ist, oder ein Gemisch aus solchen Monomeren,
(b3) mindestens ein Umsetzungsprodukt aus Acrylsäure und/oder Methacrylsäure mit dem Glycidylester einer in alpha-Stellung verzweigten Monocarbonsäure mit 5 bis 18 C-Atomen pro Molekül oder anstelle des Umsetzungsprodukts eine äquivalente Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen pro Molekül umgesetzt wird,
(b4) gegebenenfalls ein mindestens eine Carboxylgruppe pro Molekül tragendes, mit (b1), (b2), (b3), (b5), (b6) und (b7) copolymerisierbares, ethylenisch ungesättigtes Monomer oder ein Gemisch aus solchen Monomeren,
(b5) ein Polysiloxanmakromonomer mit einem zahlenmittleren Molekulargewicht Mn von 1,000 bis 40.000 Dalton und im Mittel 0,5 bis 2,5 ethylenisch ungesättigten Doppelbindungen pro Molekül oder mit im Mittel 0,5 bis 2,5 Epoxidgruppen pro Molekül oder ein Gemisch aus solchen Makromonomeren,
(b6) ein vinylaromatischer Kohlenwasserstoff oder ein Gemisch verschiedener vinylaromatischer Kohlenwasserstoffe und
(b7) gegebenenfalls ein mit (b1), (b2), (b3)f (b4), (b-3) und (b6) copolymerisierbares von (b1), (b2), (b3), (b4), (b5) und (b6) verschiedenes, im wesentlichen carboxylgruppenfreies, ethylenisch ungesättigtes Monomer oder ein Gemisch aus solchen Monomeren,
sowie
(C) 5 bis 50 Gew.-% eines Isocyanatvernetzungsmittels.

2. Beschichtungsmittel nach Anspruch 1,
**dadurch gekennzeichnet,**
**daß** die Menge an Komponente (b5) weniger als 3 Gew.-%, bevorzugt zwischen 0,1 und 1 Gew.-%, besonders bevorzugt zwischen 0,3 und 0,7 Gew.-%, jeweils bezogen auf das Gesamtgewicht der zur Herstellung des Polyacrylatharzes (B) eingesetzten Monomeren, beträgt.

3. Beschichtungsmittel nach einem der Ansprüche 1 oder 2,
**dadurch gekennzeichnet,**
**daß** das Polyacrylatharz (B) hergestellt worden ist durch Polymerisation von
(b1) 5 bis 74 Gew.-%, bevorzugt 5 bis 30
Gew.-%, der Komponente (b1),
(b2) 10 bis 40 Gew.-%, bevorzugt 15 bis 25
Gew.-%, der Komponente (b2),
(b3) 0 bis 50 Gew.-%, bevorzugt 10 bis 50
Gew.-%, der Komponente (b3),
(b4) 0 bis 10 Gew.-%, bevorzugt 0,1 bis 6
Gew.-%, der Komponente (b4),
(b5) weniger als 3 Gew.-%, bevorzugt 0,1 bis 1
Gew.-% und besonders bevorzugt 0,3 bis 0,7
Gew.-%, der Komponente (b5),
(b6) 5 bis 40 Gew.-%, bevorzugt 10 bis 30
Gew.-%, der Komponente (b6) und
(b7) 0 bis 40 Gew.-%, bevorzugt 0 bis 30
Gew.-%, der Komponente (b7),
wobei die Summe der Gewichtsanteile der Komponenten (b1) bis (b7) jeweils 100 Gew.-% beträgt.

4. Beschichtungsmittel nach einem der Ansprüche 1 bis 3,
**dadurch gekennzeichnet,**
**daß** das Polyacrylatharz (A) besteht aus:
30 bis 50 Gew.-% (a1) und
50 bis 70 Gew.-% (a2).

5. Beschichtungsmittel nach einem der Ansprüche 1 bis 4,
**dadurch gekennzeichnet,**
**daß** das Polyacrylatharz (a2) erhältlich ist durch Polymerisation von:
(a) 5 bis 50 Gew.-%, bevorzugt 10 bis 35 Gew.-%, eines oder mehrerer Monomerer, ausgewählt aus der Gruppe 4-Hydroxy-n-butyl(meth)acrylat, 3-Hydroxy-n-butyl(meth)acrylat und/oder Hydroxyethylmethacrylat,
(b) 0 bis 50 Gew.-%, bevorzugt 0 bis 30 Gew.-% eines von (a) verschiedenen, hydroxylgruppenhaltigen, ethylenisch ungesättigten, copolymerisierbaren Monomeren oder eines Gemisches aus solchen Monomeren,
(c) 5 bis 95 Gew.-%, bevorzugt 15 bis 55 Gew.-%, eines von (a) und (b) verschiedenen, aliphatischen und/oder cycloaliphatischen Esters der Acryl- und/oder Methacrylsäure oder eines Gemischs aus solchen Monomeren,
(d) 0 bis 30 Gew.-%, bevorzugt 5 bis 15 Gew.-%, eines von (a), (b) und (c) verschiedenen, copolymerisierbaren Vinylesters oder eines Gemischs aus solchen Monomeren,
(e) 0 bis 85 Gew-%, bevorzugt 15 bis 60 Gew.-%, eines von (a), (b), (c) und (d) verschiedenen, vinylaromatischen Kohlenwasserstoffs oder eines Gemischs aus solchen Monomeren, sowie
(f) 0 bis 10 Gew.-%, bevorzugt 0 bis 8 Gew.-%, eines von (a), (b), (c), (d) und (e) verschiedenen, weiteren ethylenisch ungesättigten Monomeren oder eines Gemischs aus solchen Monomeren,
zumindestens teilweise in Gegenwart der Komponente (a1), wobei die Summe der Gewichtsanteile der Monomeren (a) bis (f) jeweils 100 Gew.-% beträgt.

6. Beschichtungsmittel nach einem der Ansprüche 1 bis 5,
**dadurch gekennzeichnet,**
**daß** der Komponente (A) nach ihrer Herstellung Benzoesäure, alkyl- und/oder alkoxysubstituierte Benzoesäure und/oder Phthalsäureanhydrid, bevorzugt Benzoesäure, zugesetzt wird.

7. Beschichtungsmittel nach einem der Ansprüche 1 bis 6,
**dadurch gekennzeichnet,**
**daß** mindestens 40 Gew.-% der Komponente (a2) in Gegenwart der Komponente (a1) hergestellt worden sind.

8. Beschichtungsmittel nach einem der Ansprüche 1 bis 7,
**dadurch gekennzeichnet,**
**daß** es als Komponente (C) mindestens ein Di- und/oder ein Polyisocyanat, bevorzugt mindestens ein isocyanuratgruppenhaltiges Di- und/oder Polyisocyanat, enthält.

9. Verfahren zur Herstellung eines schützenden und/oder dekorativen Überzugs auf einer Substratoberfläche,
**dadurch gekennzeichnet,**
**daß** ein Beschichtungsmittel nach einem der Ansprüche 1 bis 8 appliziert wird.

10. Verwendung der Beschichtungsmittel nach einem der Ansprüche 1 bis 8 als Decklack, insbesondere als Uni-Decklack.

11. Verwendung der Beschichtungsmittel nach einem der Ansprüche 1 bis 8 für die Reparaturlackierung, insbesondere für den Bereich der Autoreparaturlackierung.

## Claims

1. Coating composition BM comprising
(A) from 5 to 60% by weight of at least one polyester-modified polyacrylate resin consisting of:
(a1) from 20 to 60% by weight of at least one polyester and
(a2) from 40 to 80% by weight of at least one hydroxyl-containing polyacrylate resin which has been prepared at least in part in the presence of component (a1),where
1.) the polyester (a1) has an OH number of between 90 and 130 mg of KOH/g, an acid number of less than 10 mg of KOH/g, a number-average molecular weight Mn of between 1300 and 3500 daltons and a polydispersity of between 5 and 50,
2.) the polyacrylate resin (a2) contains, incorporated by polymerization, one or more monomers selected from the group 4-hydroxy-n-butyl acrylate, 4-hydroxy-n-butyl methacrylate, 3-hydroxy-n-butyl acrylate, 3-hydroxy-n-butyl methacrylate and/or hydroxyethyl methacrylate,
3.) the polyacrylate resin (a2) has an OH number of between 50 and 150 mg of KOH/g and an acid number of between 0 and 10 mg KOH/g, and
4.) from 0.1 to 1% by weight, based on the weight of the component (A) without solvents, of at least one aromatic mono- and/or polycarboxylic acid and/or of an anhydride of an aromatic polycarboxylic acid is added to the component (A) after its preparation or to the coating composition,
and
(B) from 1 to 35% by weight of at least one hydroxyl-containing, siloxane-modified polyacrylate resin, consisting of:
(b1) an essentially carboxyl-free (meth)-acrylic ester which is different from (b2), (b3), (b4), (b5), (b6) and [lacuna] and is copolymerizable with (b2), (b3), (b4), (b5), (b6) and (b7), or a mixture of such monomers,
(b2) an ethylenically unsaturated monomer which carries at least one hydroxyl group per molecule, is essentially free from carboxyl groups, is copolymerizable with (b1), (b3), (b4), (b5), (b6) and (b7) and is different from (b3), or a mixture of such monomers,
(b3) at least one reaction product of acrylic acid and/or methacrylic acid with the glycidyl ester of an alpha-branched monocarboxylic acid having 5 to 18 carbon atoms per molecule or, instead of the reaction product, an equivalent quantity of acrylic and/or methacrylic acid which then, during or after the polymerization reaction, is reacted with the glycidyl ester of an alpha-branched monocarboxylic acid having 5 to 18 carbon atoms per molecule,
(b4) if desired, an ethylenically unsaturated monomer which carries at least one carboxyl group per molecule and is copolymerizable with (b1), (b2), (b3), (b5), (b6) and (b7), or a mixture of such monomers,
(b5) a polysiloxane macromonomer having a number-average molecular weight Mn of from 1000 to 40,000 daltons and on average from 0.5 to 2.5 ethylenically unsaturated double bonds per molecule or having on average from 0.5 to 2.5 epoxide groups per molecule, or a mixture of such macromonomers,
(b6) a vinyl-aromatic hydrocarbon or a mixture of different vinyl-aromatic hydrocarbons, and
(b7) if desired, an ethylenically unsaturated monomer which is copolymerizable with (b1), (b2), (b3) f (b4), (b-3) and (b6), is different from (b1), (b2), (b3), (b4), (b5) and (b6) and is essentially free from carboxyl groups, or a mixture of such monomers,
and
(C) from 5 to 50% by weight of an isocyanate crosslinking agent.

2. Coating composition according to claim 1, **characterized in that** the quantity of component (b5) is less than 3% by weight, preferably between 0.1 and 1% by weight, particularly preferably between 0.3 and 0.7% by weight, based in each case on the overall weight of the monomers employed to prepare the polyacrylate resin (B).

3. Coating composition according to one of claims 1 or 2, **characterized in that** the polyacrylate resin (B) has been prepared by polymerizing
(b1) from 5 to 74% by weight, preferably from 5 to 30% by weight, of the component (b1),
(b2) from 10 to 40% by weight, preferably from 15 to 25% by weight, of the component (b2),
(b3) from 0 to 50% by weight, preferably from 10 to 50% by weight, of the component (b3),
(b4) from 0 to 10% by weight, preferably from 0.1 to 6% by weight, of the component (b4),
(b5) less than 3% by weight, preferably from 0.1 to 1% by weight and, with particular preference, from 0.3 to 0.7% by weight of the component (b5),
(b6) from 5 to 40% by weight, preferably from 10 to 30% by weight, of the component (b6), and
(b7) from 0 to 40% by weight, preferably from 0 to 30% by weight, of the component (b7),
the sum of the proportions by weight of the components (b1) to (b7) being in each case 100% by weight.

4. Coating composition according to one of claims 1 to 3, **characterized in that** the polyacrylate resin (A) consists of:
from 30 to 50% by weight of (a1) and
from 50 to 70% by weight of (a2).

5. Coating composition according to one of claims 1 to 4, **characterized in that** the polyacrylate resin (a2) is obtainable by polymerizing:
(a) from 5 to 50% by weight, preferably from 10 to 35% by weight, of one or more monomers selected from the group 4-hydroxy-n-butyl (meth)acrylate, 3-hydroxy-n-butyl (meth)-acrylate and/or hydroxyethyl methacrylate,
(b) from 0 to 50% by weight, preferably from 0 to 30% by weight, of a hydroxyl-containing, ethylenically unsaturated, copolymerizable monomer which is different from (a), or of a mixture of such monomers,
(c) from 5 to 95% by weight, preferably from 15 to 55% by weight, of an aliphatic and/or cycloaliphatic ester of acrylic and/or methacrylic acid which is different from (a) and (b), or of a mixture of such monomers,
(d) from 0 to 30% by weight, preferably from 5 to 15% by weight, of a copolymerizable vinyl ester which is different from (a), (b) and (c), or of a mixture of such monomers,
(e) from 0 to 85% by weight, preferably from 15 to 60% by weight, of a vinyl-aromatic hydrocarbon which is different from (a), (b), (c) and (d), or of a mixture of such monomers, and
(f) from 0 to 10% by weight, preferably from 0 to 8% by weight, of a further ethylenically unsaturated monomer which is different from (a), (b), (c), (d) and (e), or of a mixture of such monomers
at least partially in the presence of the component (a1), the sum of the proportions by weight of the monomers (a) to (f) being in each case 100% by weight.

6. Coating composition according to one of claims 1 to 5, **characterized in that** after the preparation of component (A) benzoic acid, alkyl- and/or alkoxy-substituted benzoic acid and/or phthalic anhydride, preferably benzoic acid, are added to it.

7. Coating composition according to one of claims 1 to 6, **characterized in that** at least 40% by weight of component (a2) has been prepared in the presence of the component (a1).

8. Coating composition according to one of claims 1 to 7, **characterized in that** as component (C) it contains at least one di- and/or one polyisocyanate, preferably at least one isocyanurate group-containing di- and/or polyisocyanate.

9. Process for the production of a protective and/or decorative coating on a substrate surface, **characterized in that** a coating composition according to one of claims 1 to 8 is applied.

10. Use of the coating compositions according to one of claims 1 to 8 as topcoat, especially as solid-color topcoat.

11. Use of the coating compositions according to one of claims 1 to 8 for repair coating, especially for the area of automotive refinishing.

## Revendications

1. Composition de revêtement BM comprenant
(A) de 5 à 60% en poids d'au moins une résine de polyacrylate polyester-modifiée constituée de :
(a1) de 20 à 60% en poids d'au moins un polyester et
(a2) de 40 à 80% en poids d'au moins une résine de polyacrylate renfermant des groupés hydroxy qui a été préparée, au moins en partie, en présence du composant (a1), où
1.) le polyester (a1) présente un indice OH compris entre 90 et 130 mg KOH/g, un indice d'acide inférieur à 10 mg KOH/g, un poids moléculaire moyen en nombre Mn compris entre 1 300 et 3 500 Daltons et une polydiversité comprise entre 5 et 50,
2.) la résine de polyacrylate (a2) renferme un ou plusieurs monomères, incorporés par polymérisation, choisis parmi le groupe constitué de l'acrylate de 4-hydroxy-n-butyle, du méthacrylate de 4-hydroxy-n-butyle, de l'acrylate de 3-hydroxy-n-butyle, du méthacrylate de 3-hydroxy-n-butyle et/ou du méthacrylate d'hydroxyéthyle,
3.) la résine de polyacrylate (a2) présente un indice OH compris entre 50 et 150 mg KOH/g et un indice d'acide compris entre 0 et 10 mg KOH/g,
4.) de 0,1 à 1% en poids, par rapport au poids du composant (A) sans solvant, d'au moins un acide monocarboxylique et/ou polycarboxylique aromatique et/ou d'un anhydride d'un acide polycarboxylique aromatique est ajouté au composant (A) après sa préparation ou à la composition de revêtement,
et
(B) de 1 à 35% en poids d'au moins une résine de polyacrylate siloxane-modifiée renfermant des groupes hydroxy, constituée de :
(b1) un ester (méth)acrylique essentiellement exempt de groupes carboxy, différent de (b2), b3), (b4), (b5), (b6) et (b7) et copolymérisable avec (b2), (b3), (b4), (b5), (b6) et (b7), ou un mélange de tels monomères,
(b2) un monomère éthyléniquement insaturé différent de (b3) et copolymérisable avec (b1), (b3), (b4), (b5), (b6) et (b7), qui renferme au moins un groupe hydroxy par molécule et est essentiellement exempt de groupes carboxy, ou un mélange de tels monomères,
(b3) au moins un produit de réaction de l'acide acrylique et/ou de l'acide méthacrylique avec l'ester glycidylique d'un acide monocarboxylique ramifié en position alpha, ayant de 5 à 18 atomes de carbone par molécule, ou au lieu du produit de réaction, une quantité équivalente d'acide acrylique et/ou méthacrylique qui est alors mise à réagir durant ou après la réaction de polymérisation avec l'ester glycidylique d'un acide monocarboxylique ramifié en position alpha, ayant de 5 à 18 atomes de carbone par molécule,
(b4) éventuellement un monomère éthyléniquement insaturé renfermant au moins un groupe carboxy par molécule et copolymérisable avec (b1), (b2), (b3), (b5), (b6) et (b7), ou un mélange de tels monomères,
(b5) un macromonomère polysiloxane ayant un poids moléculaire moyen en nombre Mn de 1 000 à 40 000 Daltons et en moyenne 0,5 à 2,5 doubles liaisons éthyléniquement insaturées par molécule, ou ayant en moyenne de 0,5 à 2,5 groupes époxy par molécule, ou un mélange de tels macromonomères,
(b6) un hydrocarbure vinylaromatique ou un mélange de différents hydrocarbures vinylaromatiques, et
(b7) éventuellement un monomère éthyléniquement insaturé essentiellement exempt de groupes carboxy, différent de (b1), (b2), (b3), (b4), (b5) et (b6) et copolymérisable avec (b1), (b2), (b3), (b4), (b5) et (b6), ou un mélange de tels monomères,
(C) de 5 à 50% en poids d'un agent de réticulation isocyanate.

2. Composition de revêtement selon la revendication 1, **caractérisée en ce que** la quantité de composant (b5) est inférieure à 3% en poids, de préférence comprise entre 0,1 et 1% en poids, particulièrement préférablement comprise entre 0,3 et 0,7% en poids, dans chaque cas par rapport au poids total des monomères utilisés pour la préparation de la résine de polyacrylate (B).

3. Composition de revêtement selon l'une quelconque des revendications 1 ou 2, **caractérisée en ce que** la résine de polyacrylate (B) a été préparée par polymérisation de
(b1) de 5 à 74% en poids, de préférence de 5 à 30% en poids, du composant (b1),
(b2) de 10 à 40% en poids, de préférence de 15 à 25% en poids, du composant (b2),
(b3) de 0 à 50% en poids, de préférence de 10 à 50% en poids, du composant (b3),
(b4) de 0 à 10% en poids, de préférence de 0,1 à 6% en poids, du composant (b4),
(b5) moins de 3% en poids, de préférence de 0,1 à 1% en poids et particulièrement préférablement de 0,3 à 0,7% en poids, du composant (b5),
(b6) de 5 à 40% en poids, de préférence de 10 à 30% en poids, du composant (b6), et
(b7) de 0 à 40% en poids, de préférence de 0 à 30% en poids, du composant (b7),
la somme des proportions pondérales des composants (b1) à (b7) étant, dans chaque cas, de 100% en poids.

4. Composition de revêtement selon l'une quelconque des revendications 1 à 3, **caractérisée en ce que** la résine de polyacrylate (A) est constituée de :
30 à 50% en poids de (a1) et
50 à 70% de (a2).

5. Composition de revêtement selon l'une quelconque des revendications 1 à 4, **caractérisée en ce que** la résine de polyacrylate (a2) est obtenue par polymérisation de :
(a) de 5 à 50% en poids, de préférence de 10 à 35% en poids, d'un ou de plusieurs monomères choisis parmi le groupe constitué du (méth)acrylate de 4-hydroxy-n-butyle, du (méth)acrylate de 3-hydroxy-n-butyle et/ou du méthacrylate d'hydroxyéthyle,
(b) de 0 à 50% en poids, de préférence de 0 à 30% en poids, d'un monomère éthyléniquement insaturé, copolymérisable, renfermant des groupes hydroxy et différent de (a), ou d'un mélange de tels monomères,
(c) de 5 à 95% en poids, de préférence de 15 à 55% en poids, d'un ester aliphatique et/ou cycloaliphatique de l'acide acrylique et/ou méthacrylique, différent de (a) et (b), ou d'un mélange de tels monomères,
(d) de 0 à 30% en poids, de préférence de 5 à 15% en poids, d'un ester vinylique copolymérisable, différent de (a), (b) et (c), ou d'un mélange de tels monomères,
(e) de 0 à 85% en poids, de préférence de 15 à 60% en poids d'un hydrocarbure vinylaromatique différent de (a), (b), (c) et (d) ou d'un mélange de tels monomères, et
(f) de 0 à 10% en poids, de préférence de 0 à 8% en poids, d'un autre monomère éthyléniquement insaturé, différent de (a), (b), (c), (d) et (e), ou d'un mélange de tels monomères,
au moins en partie en présence du composant (a1), la somme des proportions pondérales des monomères (a) à (f) étant, dans chaque cas, de 100% en poids.

6. Composition de revêtement selon l'une quelconque des revendications 1 à 5, **caractérisée en ce que** l'on ajoute au composant (A), après sa préparation, de l'acide benzoïque, de l'acide benzoïque alkyl- et/ou alcoxy- substitué et/ou de l'anhydride phtalique, de préférence de l'acide benzoïque.

7. Composition de revêtement selon l'une quelconque des revendications 1 à 6, **caractérisée en ce qu'**au moins 40% en poids du composant (a2) ont été préparés en présence du composant (a1).

8. Composition de revêtement selon l'une quelconque des revendications 1 à 7, **caractérisée en ce qu'**elle comprend en tant que composant (C) au moins un diisocyanate et/ou un polyisocyanate, de préférence au moins un diisocyanate et/ou un polyisocyanate renfermant des groupes isocyanurate.

9. Procédé de production d'un revêtement protecteur et/ou décoratif sur une surface de substrat, **caractérisé en ce que** l'on applique une composition de revêtement selon l'une quelconque des revendications 1 à 8.

10. Utilisation de la composition de revêtement selon l'une quelconque des revendications 1 à 8 en tant que couche de finition, en particulier en tant que couche de finition unie.

11. Utilisation de la composition de revêtement selon l'une quelconque des revendications 1 à 8 pour le revêtement de retouches, en particulier pour le domaine du revêtement de retouches d'automobiles.
